(19) Europäisches Patentamt / European Patent Office / Office européen des brevets

(11) **EP 4 354 267 B1**

(12) **EUROPEAN PATENT SPECIFICATION**

(45) Date of publication and mention
of the grant of the patent:
**27.05.2026 Bulletin 2026/22**

(21) Application number: **22845208.2**

(22) Date of filing: **13.07.2022**

(51) International Patent Classification (IPC):
*G06F 3/0481* *(2022.01)*    *G06F 3/04845* *(2022.01)*
*G06F 3/0486* *(2013.01)*    *G06F 3/04883* *(2022.01)*
*G06F 3/14* *(2006.01)*    *G06F 9/451* *(2018.01)*
*G06F 3/147* *(2006.01)*    *G09G 5/14* *(2006.01)*

(52) Cooperative Patent Classification (CPC):
**G06F 3/0481; G06F 3/04845; G06F 3/0486;
G06F 3/04883; G06F 3/14; G06F 3/1423;
G06F 3/1454; G06F 3/147; G06F 9/452;**
G09G 5/14; G09G 2370/20

(86) International application number:
**PCT/CN2022/105482**

(87) International publication number:
**WO 2023/001043 (26.01.2023 Gazette 2023/04)**

(54) **CONTENT DISPLAY METHOD, ELECTRONIC DEVICE AND SYSTEM**

INHALTSANZEIGEVERFAHREN, ELEKTRONISCHE VORRICHTUNG UND SYSTEM

PROCÉDÉ D'AFFICHAGE DE CONTENU, DISPOSITIF ÉLECTRONIQUE ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2021 CN 202110836427**

(43) Date of publication of application:
**17.04.2024 Bulletin 2024/16**

(73) Proprietor: **Huawei Technologies Co., Ltd.
Longgang
Shenzhen, Guangdong 518129 (CN)**

(72) Inventors:
• **LIU, Di
Shenzhen, Guangdong 518129 (CN)**
• **ZHENG, Tao
Shenzhen, Guangdong 518129 (CN)**
• **SUN, Zengcai
Shenzhen, Guangdong 518129 (CN)**
• **YOU, Jiajia
Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 106 897 038    CN-A- 107 168 674
CN-A- 110 083 324    CN-A- 111 158 543
CN-A- 111 813 302    US-A1- 2013 212 511

## Description

This application claims priority to Chinese Patent Application No. 202110836427.5, filed with the China National Intellectual Property Administration on July 23, 2021 and entitled "METHOD FOR DISPLAYING CONTENT, ELECTRONIC DEVICE, AND SYSTEM".

## TECHNICAL FIELD

This application relates to the field of terminal technologies, and in particular, to a method for displaying content, an electronic device, and a system.

## BACKGROUND

Projection is a technology that synchronously displays content between electronic devices in a wired or wireless connection manner, so that a plurality of electronic devices work in a coordinated manner. The projection is widely applied to scenarios such as entertainment and office. The projection includes mirroring, extended projection, and the like. The mirroring means that a display image of a source device is projected onto a receiving device for display, and display images are the same between the source device and the receiving device. The extended projection means that an image of a source device is projected onto a receiving device for display, and the source device does not display the image.

A non-touchscreen electronic device such as a personal computer (person computer, PC) or a large screen is used as a source device, and a touchscreen electronic device such as a tablet computer or a pen display is used as a receiving device. An image of the non-touchscreen electronic device is projected onto the touchscreen electronic device in a manner of mirroring, extended projection, or the like, and the touchscreen electronic device receives a user input and then transmits a signal corresponding to the user input to the non-touchscreen electronic device, so that control of the non-touchscreen electronic device can be implemented by using the touchscreen electronic device.

For example, a PC has a strong computing capability and can meet a performance requirement for running professional drawing software, and a lot of professional drawing software is run on the PC. However, the PC generally has no touchscreen, and a user usually controls the PC by using input devices such as a keyboard and a mouse. Using the mouse and the keyboard for drawing on the PC results in poor experience. A tablet computer has a touchscreen, but a lot of professional drawing software cannot be run on a tablet computer having an operating system such as Android® or iOS®. When the tablet computer is used as an input device of the PC, the user may use a stylus or a finger for inputting on the tablet computer, to implement drawing, writing, and the like on the PC.

There is a latency in interaction between the source device and the receiving device. A latency in a process of controlling the non-touchscreen electronic device by using the touchscreen electronic device causes a latency in displaying content in the touchscreen electronic device, affecting user experience.

CN111813302A describes a method in which it is determined that a screen projection request is received when a whiteboard application runs; a screen projection window is displayed on a whiteboard application interface corresponding to the whiteboard application, the screen projection window comprises a bearing child window, a display child window and an operation child window which are sequentially displayed from bottom to top, the bearing child window is used for bearing the display child window and serves as a parent window of the operation child window, and the operation child window is loaded with an operation control; displaying screen projection data corresponding to the screen projection request in the display sub-window; and when a trigger operation detected by the operation control is received, executing a display picture change corresponding to the operation control on the whiteboard application interface. CN107168674A describes a method comprising the steps of: dividing a first terminal into a plurality of canvas layers which comprise a first canvas layer and a second canvas layer; obtaining coordinate information in real time, drawing a first annotation handwriting on the first canvas layer according to the coordinate information, directly displaying the first annotation handwriting, and simultaneously transmitting the coordinate information to a second terminal through a network; converting the coordinate information to obtain coordinate conversion information, and drawing a second annotation handwriting in the second terminal according to the coordinate conversion information; obtaining and storing a screenshot image of the current screen on the second terminal, transmitting the screenshot image to the first terminal by the network, and displaying the screenshot image on the second canvas layer; and erasing the first annotation handwriting drawn on the first canvas layer, and displaying the screenshot image of the first terminal.

## SUMMARY

This application provides a method for displaying content, an electronic device, and a system, to reduce a display latency of a touchscreen electronic device in a process in which a user controls a non-touchscreen electronic device by using the touchscreen electronic device, thereby improving user experience.

In order to achieve the foregoing objectives, the following technical solutions are used in this application.

According to a first non-claimed comparative example, a method for displaying a window of an application is provided. The method includes: A first electronic device displays a projection interface of a second electronic device, where a first application is run on the second electronic device, the projection interface includes a first window of the first application, and the first window is at a first position in the projection interface. The first electronic device receives a window dragging operation performed by a user on the first window. The first electronic device displays a second window of the first application at a second position in the projection interface in response to the window dragging operation, where the second position is any position on a dragging track generated by the window dragging operation, and the second window is drawn by the first electronic device based on the second position.

In the method, after receiving a window dragging operation performed by the user on a window in a projection interface of an application of the second electronic device, the first electronic device obtains, based on information about the window dragging operation, a position of the window after movement, locally draws an image of the window based on a stored image of the window of the application, and displays a locally drawn window on a dragging track generated by the window dragging operation. A latency in locally drawing the image of the window by the first electronic device is relatively small, so that a latency in displaying content (the window of the application) in the first electronic device can be reduced.

In a possible implementation, the first position is a start position on the dragging track generated by the window dragging operation, and the second position is an end position on the dragging track generated by the window dragging operation.

According to any one of the first comparative example or the foregoing implementations of the first comparative example, the first electronic device displays a third window of the first application at a third position in the projection interface in response to the window dragging operation, where the third position is a position other than the start position and the end position on the dragging track generated by the window dragging operation, and the third window is drawn by the first electronic device based on the third position. In this way, the window 3 of the application moves with movement of a stylus or a finger, and hand-following effect is relatively good.

According to any one of the first comparative example or the foregoing implementations of the first comparative example, the first electronic device further sends the information about the window dragging operation to the second electronic device. The first electronic device receives a projection interface update request sent by the second electronic device, where the projection interface update request includes image content that is of an updated window of the first application and that is drawn by the second electronic device based on the information about the window dragging operation.

In the method, the second electronic device draws an image of a window based on the information about the window dragging operation, and sends an image of an updated window to the first electronic device. In this way, the first electronic device may obtain an image of a continuously updated window, so that locally drawn image content of a window is updated in real time.

According to any one of the first comparative example or the foregoing implementations of the first comparative example, the first electronic device draws the second window and/or the third window based on image content of the first window. Alternatively, the first electronic device draws the second window and/or the third window based on the image content of the updated window of the first application. That is, the first electronic device performs local drawing based on stored image content of a window of the first application. The image content of the window of the first application stored by the first electronic device may be image content of a window of the first application in the projection interface when the window dragging operation starts, or image content that is of a window of the first application and that is updated in real time by the second electronic device.

According to any one of the first comparative example or the foregoing implementations of the first comparative example, the first electronic device receives the image content of the first window drawn by the second electronic device and the first position. That a first electronic device displays a projection interface of a second electronic device includes: The first electronic device displays the first window in the projection interface based on the image content of the first window and the first position. In this way, the first electronic device may obtain an image of the first window, to implement local drawing.

According to a first aspect, a method for displaying content is provided. The method includes: A first electronic device displays a projection interface of a first application, and receives a first input of a stylus, where the first application is run on a second electronic device. The first electronic device sends information about the first input to the second electronic device. The first electronic device receives a projection image from the second electronic device, and updates the projection interface based on the projection image, where the projection image includes a first writing track drawn by the second electronic device based on the information about the first input. The first electronic device obtains a drawing parameter of the second electronic device based on the first writing track, where the drawing parameter includes at least one of a brush type parameter, a line color parameter, a line width parameter, and a line texture parameter. The first electronic device receives a second input of the stylus. The first electronic device draws a second writing track based on the drawing parameter and information about the second input. The first electronic device displays the second writing track, where the second writing track is displayed as a continuation track of the first writing track.

In the method, the first electronic device obtains the drawing parameter of the second electronic device through self-learning, and performs local drawing based on the drawing parameter of the second electronic device, so that a locally drawn writing track is consistent with a writing track obtained from the second electronic device in line color, line width, line texture, and the like, thereby ensuring consistency of user experience.

According to the first aspect, that the first electronic device obtains a drawing parameter of the second electronic device based on the first writing track includes: When no stylus input is received within a preset time threshold before the first input is received, the first electronic device performs the step of obtaining a drawing parameter of the second electronic device.

In this way, when the user starts to perform input by using the stylus, the first electronic device obtains the drawing parameter of the second electronic device based on a projection image of the second electronic device. In a process in which the user performs input by using the stylus, drawing parameter learning is not started, to reduce computing power and power consumption of the first electronic device.

According to any one of the first aspect or the foregoing implementations of the first aspect, the first electronic device draws a third writing track based on the information about the first input and a drawing parameter preset by the first electronic device, where the third writing track and the first writing track have a same line track.

According to any one of the first aspect or the foregoing implementations of the first aspect, the first electronic device sends the information about the second input to the second electronic device. The first electronic device receives a second image from the second electronic device, where the second image includes a fourth writing track drawn based on the information about the second input, and the fourth writing track and the second writing track have a same line track.

According to any one of the first aspect or the foregoing implementations of the first aspect, the fourth writing track and the second writing track further have at least one of the following same elements: a line color, a line width, and a line texture.

According to any one of the first aspect or the foregoing implementations of the first aspect, the projection image is displayed at a first layer, the second writing track is displayed at a second layer, and the second layer is superimposed on the first layer.

A writing track locally drawn by the first electronic device is covered, after specific duration, by a writing track drawn by the second electronic device based on a same input. In an implementation, after the second writing track is displayed for preset duration, display of the second writing track stops. In another implementation, after the fourth writing track is displayed, display of the second writing track stops.

According to a second aspect, an electronic device is provided, including a display, one or more processors, a memory, and one or more computer programs. The processor is coupled to both the display and the memory, the one or more computer programs are stored in the memory. When the electronic device runs, the processor may execute the one or more computer programs stored in the memory, so that the electronic device performs the method in any one of the implementations of the foregoing aspects.

For technical effects corresponding to any one of the second aspect or the implementations of the second aspect, refer to technical effects of corresponding implementations of the foregoing aspects. Details are not described herein again.

According to a third aspect, a computer-readable storage medium is provided. The computer-readable storage medium stores a computer program (which may also be referred to as instructions or code). When the computer program is executed by an electronic device, the electronic device is enabled to perform the method in any one of the implementations of the foregoing aspects.

For technical effects corresponding to any one of the third aspect or the implementations of the third aspect, refer to technical effects of corresponding implementations of the foregoing aspects. Details are not described herein again.

According to a fourth aspect, a computer program product is provided. When the computer program product is run on an electronic device, the electronic device is enabled to perform the method in any one of the implementations of the foregoing aspects.

For technical effects corresponding to any one of the fourth aspect or the implementations of the fourth aspect, refer to technical effects of corresponding implementations of the foregoing aspects. Details are not described herein again.

According to a fifth aspect, a circuit system is provided. The circuit system includes a processing circuit, and the processing circuit is configured to perform the method in any one of the implementations of the foregoing aspects.

For technical effects corresponding to any one of the fifth aspect or the implementations of the fifth aspect, refer to technical effects of corresponding implementations of the foregoing aspects. Details are not described herein again.

According to a sixth aspect, a chip system is provided. The chip system includes a processor and an interface circuit. The interface circuit is configured to perform a receiving and sending function, and send instructions to the processor. When the instructions are executed by the processor, the processor is enabled to perform the method in any one of the implementations of the foregoing aspects.

For technical effects corresponding to any one of the sixth aspect or the implementations of the sixth aspect, refer to technical effects of corresponding implementations of the foregoing aspects. Details are not described herein again.

**BRIEF DESCRIPTION OF DRAWINGS**

FIG. 1 is a schematic diagram of a system architecture to which a method for displaying content is applicable according to an embodiment of this application;

FIG. 2A is a schematic diagram of a system architecture to which a method for displaying content is applicable according to an embodiment of this application;

FIG. 2B is a schematic diagram of a system architecture to which a method for displaying content is applicable according to an embodiment of this application;

FIG. 3 is a schematic diagram of an example of a scenario to which a method for displaying content is applicable according to an embodiment of this application;

FIG. 4 is a schematic diagram of an example of a scenario to which a method for displaying content is applicable according to an embodiment of this application;

FIG. 5 is a schematic diagram of a hardware structure of an electronic device according to an embodiment of this application;

FIG. 6 is a diagram of an example scenario of a method for displaying content according to an embodiment of this application;

FIG. 7 is a diagram of an example scenario of a method for displaying content according to an embodiment of this application;

FIG. 8A is a diagram of an example scenario of a method for displaying content according to an embodiment of this application;

FIG. 8B is a diagram of an example scenario of a method for displaying content according to an embodiment of this application;

FIG. 9 is a diagram of an example scenario of a method for displaying content according to an embodiment of this application;

FIG. 10 is a diagram of an example scenario of a method for displaying content according to an embodiment of this application;

FIG. 11 is a diagram of an example scenario of a method for displaying content according to an embodiment of this application;

FIG. 12 is a diagram of an example scenario of a method for displaying content according to an embodiment of this application;

FIG. 13 is a schematic diagram of a method for obtaining a drawing parameter in a method for displaying content according to an embodiment of this application;

FIG. 14 is a schematic diagram of a method for obtaining a drawing parameter in a method for displaying content according to an embodiment of this application;

FIG. 15 is a schematic diagram of a method for obtaining a drawing parameter in a method for displaying content according to an embodiment of this application;

FIG. 16 is a schematic diagram of a method for displaying content according to an embodiment of this application;

FIG. 17A and FIG. 17B are a schematic diagram of a method for displaying content according to an embodiment of this application;

FIG. 18 is a schematic diagram of a method for displaying content according to an embodiment of this application;

FIG. 19 is a schematic diagram of a method for displaying content according to an embodiment of this application;

FIG. 20 is a diagram of an example scenario of a method for displaying content according to an embodiment of this application;

FIG. 21 is a schematic diagram of a method for displaying content according to an embodiment of this application;

FIG. 22 is a diagram of an example scenario of a method for displaying content according to an embodiment of this application;

FIG. 23 is a diagram of an example scenario of a method for displaying content according to an embodiment of this application; and

FIG. 24 is a schematic diagram of structure composition of an electronic device according to an embodiment of this application.

## DESCRIPTION OF EMBODIMENTS

Terms used in the following embodiments are merely intended to describe specific embodiments, but are not intended to limit this application. The words "one", "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" mean one or at least two (including two). The term "and/or" is used to describe an association relationship of associated objects and indicates that three relationships may exist. For example, A and/or B may indicate the following cases: Only A exists, both A and B exist, and only B exists, where A and B each may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified.

In the following description, the terms "first" and "second" are merely intended for a purpose of description, and shall not be interpreted as indicating or implying relative importance or implying a quantity of indicated technical features. Therefore, a feature defined with "first" or "second" may explicitly or implicitly include one or more features.

In embodiments of this application, the words such as "example" or "for example" are used to represent giving an example, an illustration, or a description. Any embodiment or design solution described as an "example" or "for example" in embodiments of this application shall not be explained as being more preferred or having more advantages than another embodiment or design solution. To be precise, the words such as "example" or "for example" are intended to present a related concept in a specific manner.

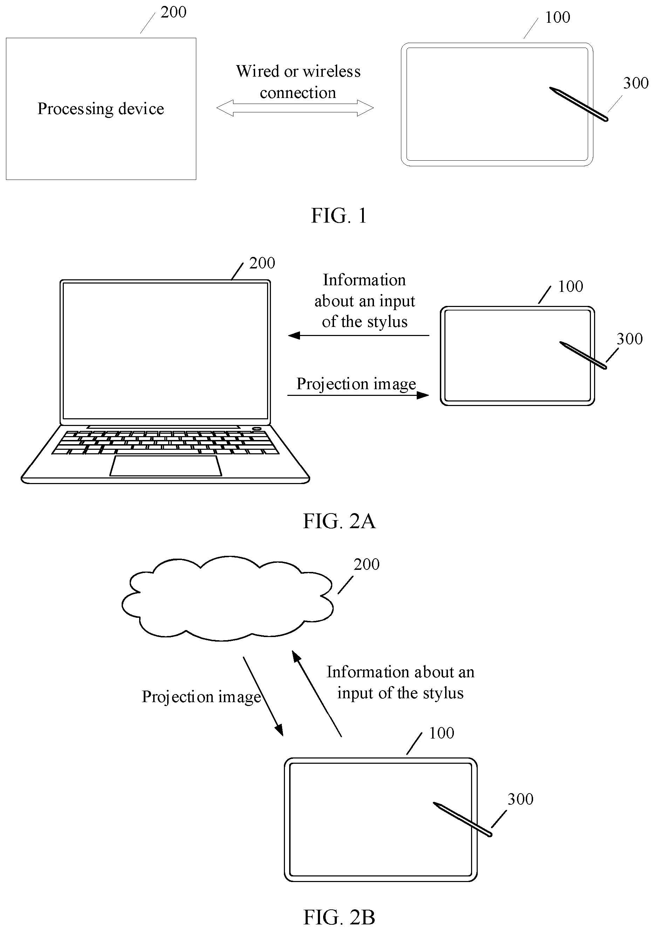

A method for displaying content provided in embodiments of this application may be applied to a system shown in FIG. 1. The system includes an electronic device 100 having a touchscreen and a processing device 200. The electronic device 100 and the processing device 200 are connected to each other in a wired (for example, a high definition multimedia interface (high definition multimedia interface, HDMI)) or wireless (for example, wireless fidelity (wireless fidelity, Wi-Fi)) manner. An application 1 is run on the processing device 200. The processing device 200 projects each interface of the application 1 onto the electronic device 100 for display.

The electronic device 100 may further receive an input of a user. For example, the system further includes a stylus 300. The user may perform input on a screen (touchscreen) of the electronic device 100 by using the stylus 300. For another example, the user may perform input on the screen (touchscreen) of the electronic device 100 by using a finger. This embodiment of this application is described by using an example in which the user performs input by using the stylus 300.

The electronic device 100 receives an input of the stylus 300, obtains information about the input, such as input coordinates, a sense of pressure, and an inclination angle of the stylus 300 on the screen, and transmits the information about the input to the processing device 200 in a wired or wireless manner. The processing device 200 performs a corresponding operation (for example, drawing a writing track in a display interface of the application 1, or dragging a window of the application 1) on the application 1 based on the information about the input, renders an interface of the application 1, and performs synthesis, to generate a projection image. In an implementation, the processing device 200 compresses the generated projection image into a video stream, and sends the video stream to the electronic device 100. The electronic device 100 decompresses the video stream to obtain the projection image, and displays the projection image on the screen.

The electronic device 100 may include a tablet computer, a handwriting tablet, a portable mobile device (for example, a mobile phone), a handheld computer, a notebook computer, a netbook, a personal computer (personal computer, PC), a smart home device (for example, a smart television, a smart screen, or a large screen), a personal digital assistant (personal digital assistant, PDA), a wearable device (for example, a smartwatch or a smart band), an in-vehicle computer, or the like. This is not limited in embodiments of this application.

The processing device 200 may include a personal computer (personal computer, PC), a portable mobile device (for example, a mobile phone), a handheld computer, a notebook computer, a netbook, a tablet computer, a smart television, a smart screen, a large screen, or the like. This is not limited in embodiments of this application.

The stylus 300 may include a stylus pen, a capacitive stylus, and the like. This is not limited in embodiments of this application.

For example, a tablet computer is used as the electronic device 100, and a PC is used as the processing device 200. FIG. 2A shows an example of a system to which a method for displaying content is applicable according to an embodiment of this application. The tablet computer is wirelessly connected to the PC. For example, the tablet computer and the PC are connected to each other through wireless fidelity (wireless fidelity, Wi-Fi). An application 1 is run on the PC, and the tablet computer is set as an input device of the PC. The PC further projects an interface of the application 1 onto the tablet computer for display. Each time the tablet computer receives an input of a user, the tablet computer sends information about the input to the PC for processing. The PC performs a corresponding operation based on the information about the input, and updates the interface of the application 1. In this way, the user may perform input on the tablet computer by using a stylus, to control the PC to perform a corresponding operation on the application 1.

The PC further projects an updated interface of the application 1 onto the tablet computer for display. In an implementation, the PC compresses an updated projection image into a video stream, and transmits the video stream to the tablet computer. The tablet computer decompresses the video stream to obtain the updated projection image, and displays the updated projection image. In this way, both the tablet computer and the PC display the updated interface of the application 1.

In this way, the tablet computer only displays an interface of the application 1 without a need to install and run the application 1. The tablet computer may use the application 1 by using a strong computing capability of the PC. The PC may receive an input of the user by using the tablet computer, so that the user can use the stylus to modify a document on a device that has no touchscreen, such as the PC, and input a text to the document by hand, or draw a picture in drawing software, or drag an application window, or the like.

It should be noted that, in some embodiments, the processing device 200 may be a server instead of a terminal device. For example, as shown in FIG. 2B, the processing device 200 is a cloud server or a remote server. After receiving an input of the stylus, the tablet computer transmits information about the input of the stylus to the server. The server performs a corresponding operation based on the information about the input, generates a projection image, and transmits the projection image to the tablet computer. The tablet computer obtains and displays the projection image. The tablet computer implements high-performance stylus input by using a strong computing capability of the server, providing better input experience for the user.

In the foregoing process, factors such as a latency in transmitting the information about the input from the electronic device 100 to the processing device 200, and a latency in generating the projection image by the processing device 200 and transmitting the projection image from the processing device 200 to the electronic device 100 cause a latency in displaying content by the electronic device 100. As a result, poor user experience is brought by poor hand-following effect.

Hand-following effect may be represented by a content displaying latency. The content displaying latency is duration starting from a time at which the electronic device receives an input of the user (for example, a moment at which the stylus or the finger of the user leaves the screen) to a time at which content corresponding to the input is displayed on the screen. A shorter content displaying latency indicates better hand-following effect. A longer content displaying latency indicates poorer hand-following effect.

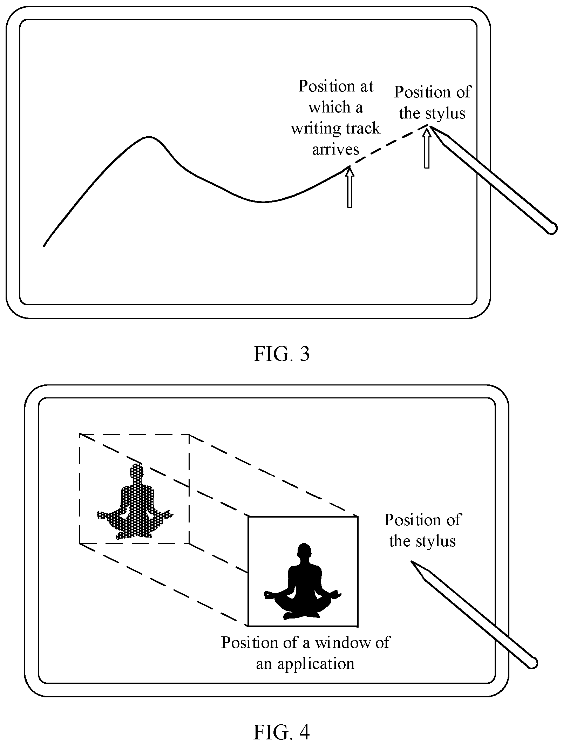

In an example, as shown in FIG. 3, a stylus is used to draw a line on a screen of an electronic device. After receiving an input of the stylus on the screen of the electronic device, the electronic device transmits information about the input of the stylus to a processing device through wired or wireless connection. The processing device performs drawing based on the information about the input, and synthesizes an image including a writing track, and the processing device sends a generated projection image to the electronic device. The electronic device displays the image including the writing track on the screen. Factors such as a latency in transmitting the information about the input of the stylus from the electronic device to the processing device, a latency in generating the image including the writing track by the processing device, a latency in transmitting the image including the writing track from the processing device to the electronic device, and a latency in displaying the image including the writing track by the electronic device cause a latency in a process from receiving the input of the stylus to displaying content (displaying the writing track) by the electronic device. In a process in which the stylus is used to draw the line on the screen, there is a distance between a position of the stylus on the screen and the writing track. A longer content displaying latency indicates a longer distance between the position of the stylus on the screen and the writing track, and indicates poorer hand-following effect.

In another example, as shown in FIG. 4, a user drags a window of an application on a screen of an electronic device by using a stylus, to move the window on the screen. After receiving an input of the stylus on the screen of the electronic device, the electronic device transmits information about the input of the stylus (for example, input coordinates) to a processing device through wired or wireless connection. The processing device performs drawing based on the information about the input, and synthesizes an image obtained after the window of the application is moved, and the processing device sends, to the electronic device, the image obtained after the window of the application is moved. The electronic device displays, on the screen, the image obtained after the window of the application is moved. Factors such as a latency in transmitting the information about the input of the stylus from the electronic device to the processing device, a latency in generating the image of the window of the application by the processing device, a latency in transmitting the image of the window of the application from the processing device to the electronic device, and a latency in displaying, by the electronic device, the image obtained after the window of the application is moved cause a latency in a process from receiving the input of the stylus to displaying content (displaying the window of the application) by the electronic device. In a process in which the stylus is used to drag the window of the application on the screen, there is a distance between a position of the stylus on the screen of the electronic device and a position of the window of the application. A longer content displaying latency indicates a longer distance between the position of the stylus on the screen and the position of the window of the application, and indicates poorer hand-following effect.

An embodiment of this application provides a method for displaying content. An electronic device displays a projection interface of an application 1 on a processing device. After receiving an input of a stylus performed by a user on the projection interface of the application 1, the electronic device transmits information about the input of the stylus to the processing device for processing. The processing device performs drawing on the application 1 based on the information about the input. The electronic device further performs local drawing based on the input of the stylus. Because a latency in local drawing performed by the electronic device is less than a latency in obtaining a projection interface by the electronic device from the processing device, a distance between the stylus and displayed content on the screen of the electronic device can be reduced, thereby reducing a latency in displaying content in the electronic device, and improving hand-following effect of the stylus.

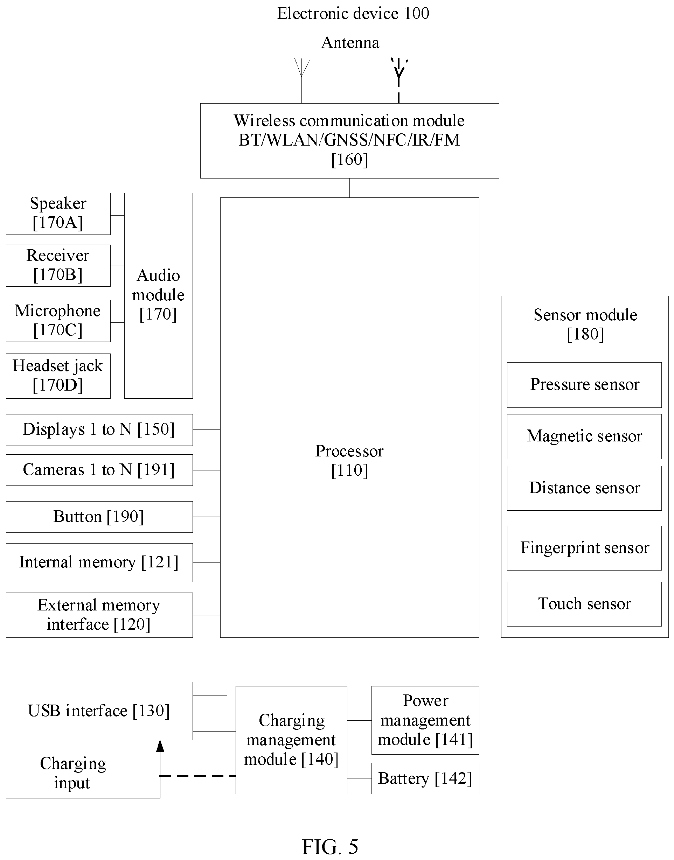

For example, FIG. 5 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, a display 150, an antenna, a wireless communication module 160, an audio module 170, a speaker 170A, a receiver 170B, a microphone 170C, a headset jack 170D, a sensor module 180, a button 190, a camera 191, and the like. The sensor module 180 may include a pressure sensor, a magnetic sensor, a distance sensor, a fingerprint sensor, a touch sensor, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 191, and the like through different I2C bus interfaces. For example, the processor 110 may be coupled to the touch sensor through an I2C interface, so that the processor 110 communicates with the touch sensor through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and encode an analog signal. In some embodiments, the audio module 170 may be coupled to the wireless communication module 160 through a PCM bus interface. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 and a peripheral component such as the display 150 or the camera 191. The MIPI interface includes a camera serial interface (camera serial interface, CSI), a display serial interface (display serial interface, DSI), and the like. In some embodiments, the processor 110 communicates with the camera 191 through the CSI, to implement a photographing function of the electronic device 100. The processor 110 communicates with the display 150 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 191, the display 150, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio by using the headset. Alternatively, the interface may be configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 150, the camera 191, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna, the wireless communication module 160, the modem processor, the baseband processor, and the like.

The antenna is configured to transmit and receive an electromagnetic wave signal. Each antenna in the electronic device 100 may be configured to cover one or more communication frequency bands. Different antennas may be multiplexed to improve antenna utilization. For example, the antenna may be multiplexed as a diversity antenna in a wireless local area network. In some other embodiments, the antenna may be used in combination with a tuning switch.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 150. In some embodiments, the modem processor may be an independent component. In some other embodiments, the modem processor may be independent of the processor 110, and is disposed in a same component as another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

The electronic device 100 implements a display function by using the GPU, the display 150, the application processor, and the like. The GPU is a microprocessor for image processing, and is connected to the display 150 and the application processor. The GPU is configured to perform mathematical and geometric computation, and render an image. The processor 110 may include one or more GPUs that execute program instructions to generate or change display information.

The display 150 is configured to display an image, a video, and the like. The display 150 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 150. N is a positive integer greater than 1.

The electronic device 100 may implement a photographing function by using the ISP, the camera 191, the video codec, the GPU, the display 150, the application processor, and the like.

The ISP is configured to process data fed back by the camera 191. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 191.

The camera 191 is configured to capture a static image or a video. An optical image of an object is generated by using the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 191. N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The processor 110 runs the instructions stored in the internal memory 121, to perform various functional applications of the electronic device 100 and data processing. The internal memory 121 may include a program storage region and a data storage region. The program storage region may store an operating system, an application required by at least one function (for example, a sound play function and an image play function), and the like. The data storage region may store data (for example, audio data and a phone book) and the like created during use of the electronic device 100. In addition, the internal memory 121 may include a high-speed random access memory, and may further include a nonvolatile memory, for example, at least one magnetic disk storage device, a flash storage device, and a universal flash storage (universal flash storage, UFS).

The electronic device 100 may use the audio module 170, the speaker 170A, the receiver 170B, the microphone 170C, the headset jack 170D, the application processor, and the like to implement an audio function, for example, music playing and recording.

The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear for listening to a voice.

The microphone 170C, also referred to as a "mike" or a "mic", is configured to convert a sound signal into an electrical signal. When making a call or sending voice information, a user may make a sound by moving a human mouth close to the microphone 170C, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The magnetic sensor includes a Hall effect sensor. The electronic device 100 may detect opening and closing of a flip cover by using the magnetic sensor. The distance sensor is configured to measure a distance. The electronic device 100 may measure a distance in an infrared manner or a laser manner. In some embodiments, in a photographing scenario, the electronic device 100 may measure a distance by using the distance sensor to implement quick focusing. The fingerprint sensor is configured to collect a fingerprint. The electronic device 100 may use a feature of the collected fingerprint to implement fingerprint-based unlocking, application lock access, fingerprint-based photographing, fingerprint-based call answering, and the like.

The touch sensor is also referred to as a "touch panel". The touch sensor may be disposed on the display 150, and the touch sensor and the display 150 form a touchscreen, which is also referred to as a "touch screen". The touch sensor is configured to detect a touch operation performed on or near the touch sensor. The touch sensor may transfer the detected touch operation to the application processor to determine a type of a touch event. The display 150 may provide a visual output related to the touch operation. In some other embodiments, the touch sensor may alternatively be disposed on a surface of the electronic device 100, and is at a position different from that of the display 150.

The pressure sensor is configured to sense a pressure signal, and may convert the pressure signal into an electrical signal. In some embodiments, the pressure sensor may be disposed on the display 150. There are a plurality of types of pressure sensors, for example, a resistive pressure sensor, an inductive pressure sensor, and a capacitive pressure sensor. The capacitive pressure sensor may include at least two parallel plates made of conductive materials. When force is applied to the pressure sensor, capacitance between electrodes changes. The electronic device 100 determines pressure intensity based on a capacitance change. When a touch operation is performed on the display 150, the electronic device 100 detects intensity of the touch operation by using the pressure sensor. The electronic device 100 may further calculate a touch position based on a detection signal of the pressure sensor. In some embodiments, the pressure sensor is configured to detect an input position, a sense of pressure, and the like of a stylus.

The button 190 includes a power button, a volume button, and the like. The button 190 may be a mechanical button, or may be a touch button. The electronic device 100 may receive a button input, and generate a button signal input related to a user setting and function control of the electronic device 100.

An example in which a tablet computer is an electronic device 100 and a PC is a processing device 200 is used below to describe in detail a method for displaying content according to an embodiment of this application.

In a scenario, the tablet computer is wirelessly connected to the PC, and the tablet computer is set as an input device of the PC. An application 1 is run on the PC. A user uses a stylus to draw a line on the tablet computer, to input handwriting to a display interface of the application 1. For example, the application 1 is a drawing application, and the user uses the stylus to draw a line on the tablet computer, to input drawing handwriting to a display interface of the drawing application.

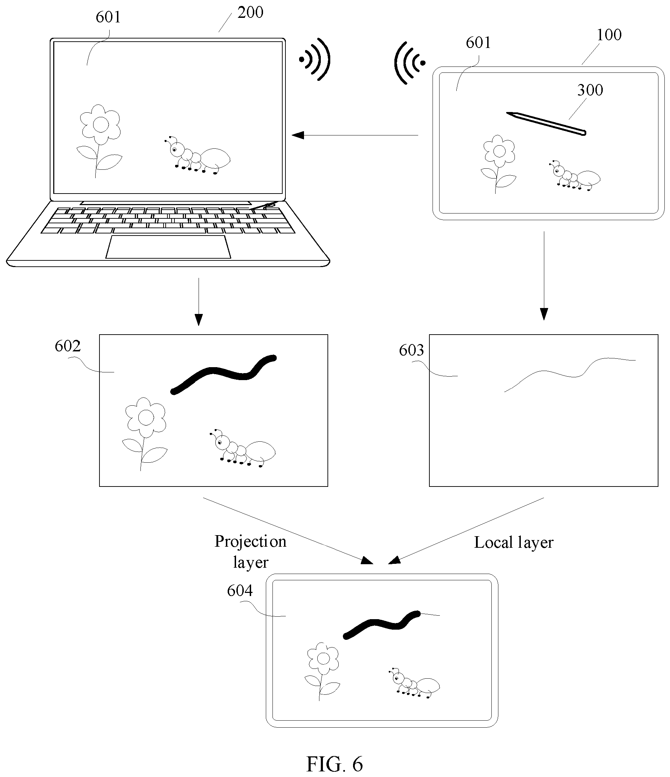

For example, as shown in FIG. 6, a PC 200 displays an interface 601 of an application 1, the PC 200 projects the interface 601 of the application 1 onto a tablet computer 100 for display, and the tablet computer 100 displays the interface 601 (a projection interface) of the application 1. A user uses a stylus 300 to draw a line in the projection interface on the tablet computer 100. The tablet computer 100 receives an input of the stylus 300, and transmits information about the input of the stylus to the PC 200 through wireless communication (for example, Bluetooth). The information about the input includes input coordinates, and may further include any one or any combination of the following: a sense of pressure, an inclination angle, and the like. The PC 200 draws a writing track 1 based on the information about the input and a drawing parameter. The drawing parameter includes any one or any combination of the following: a brush type (for example, pen, pencil, marker, watercolor pen, or oil paintbrush), a line color (for example, black, red, green, blue, or purple), a line width, and a line texture (for example, no texture, water ripple, marbling, wood texture, or gravel texture). For example, the application 1 on the PC 200 determines a position of a drawing point based on the input coordinates in the information about the input, determines a width of a drawing line based on the sense of pressure in the information about the input, determines a size of the drawing point based on the inclination angle in the information about the input, and determines a line width of a writing track based on the line width in the drawing parameter. The PC 200 further performs rendering and synthesis based on a current display interface and the writing track 1, and generates a projection image 602 including the writing track 1. In an implementation, after combining application layers, a desktop window manager of the PC 200 invokes a Windows screenshot application programming interface (application program interface, API) to capture a desktop image. In some examples, the PC 200 uses a desktop image (which includes a display interface of the application 1) as a projection image to perform video coding, and then sends the desktop image to the tablet computer 100 through wireless communication (for example, a Wi-Fi Direct channel). The tablet computer 100 decompresses a video stream and obtains the desktop image, to be specific, obtains the projection image 602 including the writing track 1. In some other examples, the PC 200 divides the desktop image (which includes the display interface of the application 1) into a plurality of rectangular regions, and detects a changed rectangular region in a current frame of image compared with a previous frame of image. If a sum of areas of rectangular regions whose images change is less than a preset threshold, an image of a rectangular region whose image changes is encoded, and is sent to the tablet computer 100. The tablet computer 100 decompresses an image to obtain the image of the rectangular region whose image changes, and obtains the projection image 602 based on the stored previous frame of image and the image of the rectangular region whose image changes this time. The projection image 602 includes the writing track 1. If the sum of the areas of the rectangular regions whose images change is greater than or equal to the preset threshold, the desktop image is used as a projection image for performing video coding, and then the desktop image is sent to the tablet computer 100. The tablet computer 100 decompresses a video stream and obtains the projection image 602. The projection image 602 includes the writing track 1.

The tablet computer 100 further performs local drawing based on the input of the stylus, for example, generates a writing track 2 (a local image 603) based on the information about the input of the stylus. After receiving the projection image 602 from the PC 200, the tablet computer 100 superimposes the locally drawn writing track 2 (the local image 603) on the projection image 602 for display, that is, an updated projection interface 604 is displayed. In an example, a display image (the updated projection interface 604) of the tablet computer includes two layers. A bottom layer is a projection layer (which includes the projection image 602), a top layer is a local layer (which includes the local image 603), and the local layer is superimposed on the projection layer. The tablet computer 100 displays an image obtained by combining the projection layer and the local layer.

It may be understood that the tablet computer 100 merely draws a writing track, and does not need to generate a complete image of the display interface of the application 1. A latency in drawing a writing track is relatively small. However, a process in which the information about the input of the stylus is transmitted from the tablet computer 100 to the PC 200, the PC 200 generates a projection image, and the projection image is transmitted from the PC 200 to the tablet computer 100 takes a relatively long time. In other words, a latency in obtaining the projection image by the tablet computer 100 is relatively long. Within the latency in obtaining the projection image by the tablet computer 100, the user continues to perform input on a display of the tablet computer 100 by using the stylus 300. There is a distance between the writing track 1 displayed by the tablet computer 100 and the stylus 300. Because a latency in locally drawing a writing track by the tablet computer 100 is less than a latency in obtaining a projection image from the PC 200, a distance between the stylus and the writing track on the screen of the tablet computer 100 can be reduced by superimposing, for display, the writing track that is locally drawn by the tablet computer 100 on the writing track that is drawn by the PC 200, thereby reducing a latency in displaying content in the tablet computer 100, and improving hand-following effect of the stylus.

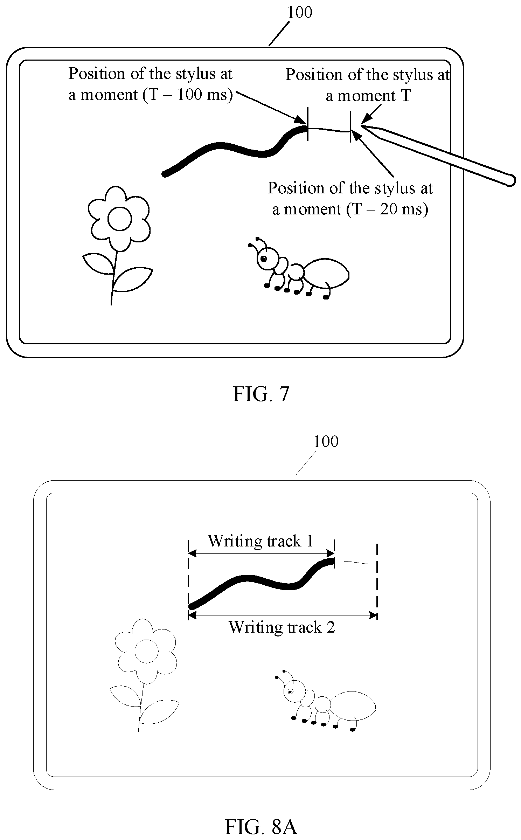

There is a first latency when the tablet computer 100 obtains a projection image, and there is a second latency when the tablet computer 100 locally draws a writing track. A display image of the tablet computer 100 at a moment T is an image obtained by combining a projection image that is generated by the PC 200 based on an input at a moment (T - First latency) and a writing track 2 that is locally drawn by the tablet computer 100 based on an input at a moment (T - Second latency). For example, as shown in FIG. 7, a latency in obtaining a projection image by the tablet computer 100 is 100 milliseconds (ms), and a latency in locally drawing a writing track by the tablet computer 100 is 20 ms. At the moment T, a writing track in the projection image obtained by the tablet computer 100 from the PC 200 is drawn based on an input of the stylus at a moment (T - 100 ms), and the locally drawn writing track is drawn based on an input of the stylus at a moment (T - 20 ms). The locally drawn writing track reduces a distance between the writing track drawn by the processing device and the stylus.

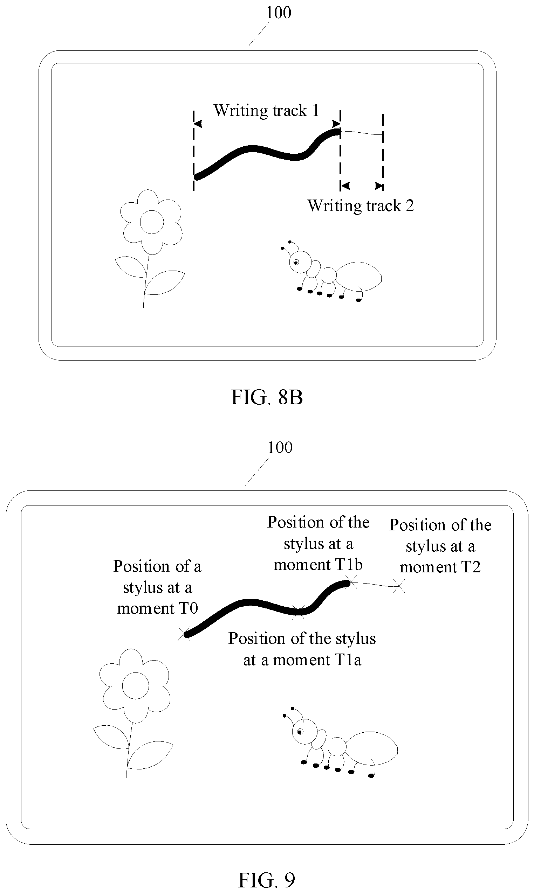

It may be understood that a point locally drawn by the tablet computer is covered, after specific duration, by a point drawn by the PC based on a same input. In other words, the writing track 2 is a continuation track of the writing track 1, and the writing track 2 partially overlaps the writing track 1. For example, as shown in FIG. 8A, a part of the writing track 2 completely coincides with the writing track 1, and a remaining part of the writing track 2 is a continuation of the writing track 1. In an implementation, after the writing track locally drawn by the tablet computer is displayed for preset duration, display of the writing track stops. For example, the preset duration is the first latency in obtaining the projection image by the tablet computer. For another example, the preset duration is (the first latency in obtaining the projection image by the tablet computer minus the second latency in locally drawing the writing track). In this case, the writing track 2 is a continuation track of the writing track 1, and the writing track 2 does not overlap the writing track 1. For example, as shown in FIG. 8B, the writing track 2 does not overlap the writing track 1.

It should be noted that in this embodiment of this application, an example in which the PC and the tablet computer perform drawing once when receiving one input is used for description. In some other embodiments, after receiving a plurality of inputs, the PC and the tablet computer may perform drawing once based on the plurality of inputs. For example, drawing is performed once based on inputs of the stylus that are received within 10 ms. This is not limited in embodiments of this application.

For example, as shown in FIG. 9, at a moment T0, the tablet computer 100 displays a projection interface of the PC, and the projection interface does not include handwriting. The user uses the stylus to draw a line on the tablet computer 100. The tablet computer 100 receives an input of the stylus. For example, the tablet computer uses inputs of the stylus received within first duration as one input, and sends input information corresponding to the input to the PC 200 for drawing a writing track. For example, in FIG. 9, the tablet computer 100 sends, to the PC 200, input information corresponding to an input of the stylus between a moment T0 and a moment T1b. The PC 200 generates, based on the input of the stylus between the moment T0 and the moment T1b, a projection image including a writing track 1. The tablet computer 100 obtains the projection image including the writing track 1.

The tablet computer 100 further performs local drawing based on the input of the stylus. In an example, the tablet computer 100 performs local drawing based on an input of the stylus between the moment T1b and a moment T2, and generates a writing track 2. An input time period of the input of the stylus between the moment T1b and the moment T2 is after an input time period of the input of the stylus between the moment T0 and the moment T1b, and does not overlap the input time period of the input of the stylus between the moment T0 and the moment T1b. Correspondingly, the writing track 2 is a continuation track of the writing track 1, and the writing track 2 does not overlap the writing track 1. In another example, the tablet computer 100 performs local drawing based on an input of the stylus between a moment T1a and the moment T2, and generates a writing track 2. The moment T1a is after the moment T0 and is before the moment T1b. The writing track 2 partially overlaps the writing track 1, and the writing track 2 includes a continuation part of the writing track 1.

The tablet computer 100 displays an updated projection interface. The projection image including the writing track 1 is displayed at a projection layer of the updated projection interface, and the writing track 2 (a local layer) is superimposed on the projection image for display. The writing track 2 includes the continuation part of the writing track 1, so that a distance between the writing track 1 and the stylus is reduced, and a line drawing latency of the tablet computer 100 is reduced.

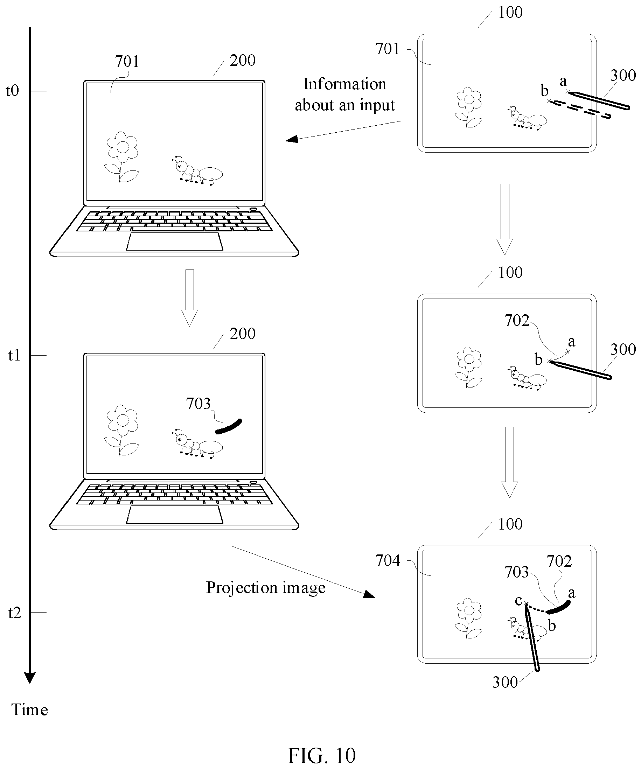

FIG. 10 shows an example scenario of a method for displaying content according to an embodiment of this application.

As shown in FIG. 10, an application 1 is run on a PC 200. For example, the application 1 is a drawing application. A tablet computer 100 is set as an input device of the PC 200. The PC 200 projects an interface 701 of the application 1 onto the tablet computer 100 for display. The tablet computer 100 displays the interface 701 of the drawing application. A user uses a stylus 300 to draw a line in the interface 701. For example, at a moment t0, the tablet computer 100 receives an input obtained when the stylus 300 moves from a point a to a point b in the interface 701. The tablet computer 100 sends, to the PC 200, information about the input obtained when the stylus 300 moves from the point a to the point b, and performs local drawing based on the information about the input. For example, the tablet computer 100 locally draws a writing track 702. At a moment t1, the tablet computer 100 displays the writing track 702 in the interface 701. The PC 200 receives the information about the input obtained when the stylus 300 moves from the point a to the point b, and generates, based on the information, a projection image including a writing track 703. The PC 200 sends the projection image including the writing track 703 to the tablet computer 100. The tablet computer 100 obtains the projection image including the writing track 703, updates the projection interface at a moment t2, and displays, at a projection layer, the projection image including the writing track 703.

It may be understood that a local layer of an updated projection interface 704 includes the writing track 702, the projection layer includes the writing track 703, and the local layer is superimposed on the projection layer. Both the writing track 702 and the writing track 703 are drawn based on the input obtained when the stylus 300 moves from the point a to the point b, and the writing track 702 and the writing track 703 have a same line track.

Because a latency in local drawing performed by the tablet computer 100 is less than a latency in obtaining the projection image from the PC 200, the moment t1 is earlier than the moment t2. In other words, the writing track locally drawn by the tablet computer 100 is displayed on a screen of the tablet computer 100 earlier than the writing track drawn by the PC 200, so that a writing track input by the stylus can be displayed to the user more quickly, and a line drawing latency of the stylus can be reduced, thereby improving hand-following effect of the stylus.

At the moment t2, the tablet computer 100 obtains, from the PC 200, the projection image including the writing track 703, and displays the projection image at the projection layer. The writing track 703 has the same line track as the writing track 702, and covers the writing track 702. From the moment t2, display of the writing track 702 may stop. In some examples, after the writing track 702 locally drawn by the tablet computer 100 is displayed for a period of time, display of the writing track 702 stops at a moment t3. For example, the moment t3 is equal to the moment t2, or the moment t3 is later than the moment t2.

It may be understood that, in an example, between the moment t0 and the moment t2, the user continues to use the stylus 300 to draw a line on the tablet computer 100, and the stylus 300 moves from the point b to a point c. The tablet computer 100 performs local drawing based on information about an input obtained when the stylus moves from the point b to the point c, and displays a locally generated writing track (a line segment between the point b and the point c in FIG. 10, which is indicated by a dashed line, to distinguish the writing track from the writing track 702 and the writing track 703).

According to the method for displaying content provided in this embodiment of this application, an electronic device generates, by using a computing capability of a processing device, a projection image including a writing track, locally draws a writing track, and superimposes, for display, the locally drawn writing track on the projection image generated by the processing device. Because a latency in local drawing performed by the electronic device is relatively small, the locally drawn writing track reduces a distance between a stylus on a screen of the electronic device and the writing track in the projection image, thereby reducing a line drawing latency of a stylus input on the electronic device, and improving hand-following effect of the stylus.

In some embodiments, for a same input of a stylus, because different drawing parameters are used, a writing track drawn by a PC and a writing track drawn by a tablet computer may be different in line color, line width, line texture, and the like. For example, in FIG. 6, the tablet computer 100 performs local drawing based on a drawing parameter of the tablet computer 100, and the PC 200 performs drawing based on a drawing parameter of the PC 200. For example, the tablet computer 100 draws the writing track 2 by using a brush type "pen". The writing track 1 obtained by the tablet computer 100 from the PC 200 is drawn by the PC 200 by using a brush type "paint brush". In the updated projection interface 604, the writing track 2 locally drawn by the tablet computer 100 is thinner than the writing track 1 drawn by the PC 200. In this case, in the updated projection interface displayed by the tablet computer, there is unevenness between the locally drawn writing track and the writing track in the image received from the PC, affecting consistency of user experience.

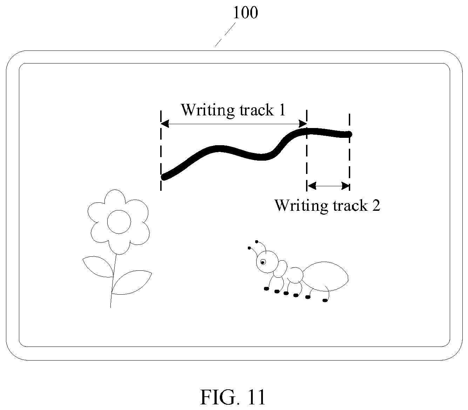

According to a method for displaying content provided in an embodiment of this application, a tablet computer obtains a drawing parameter of a PC, and performs local drawing based on the drawing parameter of the PC. In this way, a locally drawn writing track may be consistent with a writing track obtained from the PC in line color, line width, line texture, and the like, thereby ensuring consistency of line drawing experience of a user. For example, as shown in FIG. 11, a writing track 2 locally drawn by the tablet computer is completely consistent with a writing track 1 obtained from the PC in line color, line width, line texture, and the like, and there is no unevenness.

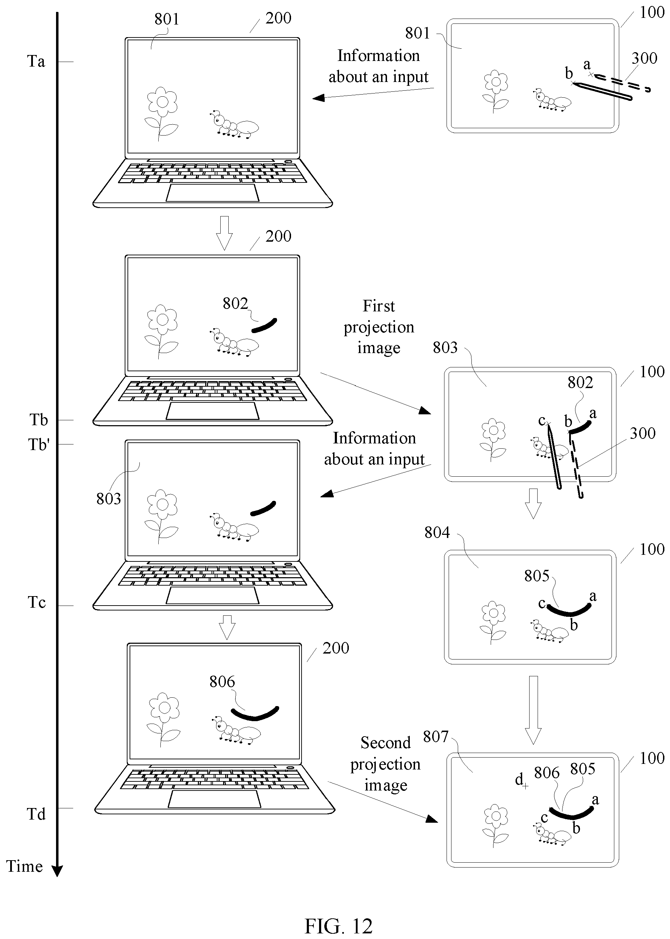

FIG. 12 shows an example scenario of a method for displaying content according to an embodiment of this application. As shown in FIG. 12, an application 1 (a drawing application) is run on a PC 200. A tablet computer 100 is set as an input device of the PC 200. The PC 200 displays an interface 801 of the application 1, and the tablet computer 100 displays a projection interface (the interface 801 of the application 1). A user uses a stylus 300 to draw a line in the interface 801. The tablet computer 100 receives an input obtained when the stylus 300 moves from a point a to a point b in the interface 801. At a moment Ta, the tablet computer 100 sends, to the PC 200, information about the input obtained when the stylus 300 moves from the point a to the point b.

The PC 200 receives the information about the input obtained when the stylus 300 moves from the point a to the point b, and generates, based on the information, a first projection image including a writing track 802. The PC 200 sends the first projection image including the writing track 802 to the tablet computer 100. The tablet computer 100 obtains the first projection image including the writing track 802, updates the projection interface at a moment Tb, and displays an updated projection interface 803. A projection layer of the updated projection interface 803 includes the first projection image. At the moment Tb, the tablet computer 100 does not obtain a drawing parameter of the PC 200. In an implementation, as shown in FIG. 12, before obtaining the drawing parameter of the PC 200, the tablet computer 100 does not perform local drawing. In another implementation, before obtaining the drawing parameter of the PC 200, the tablet computer 100 performs local drawing based on a drawing parameter preset by the tablet computer 100 (not shown in FIG. 12). It may be understood that, if the drawing parameter of the tablet computer 100 is different from the drawing parameter of the PC 200, a writing track that is drawn by the tablet computer 100 based on the drawing parameter of the tablet computer 100 and the information about the input obtained when the stylus 300 moves from the point a to the point b is different from the writing track 802 in line color, line width, or line texture.

The tablet computer 100 receives the writing track 802, and obtains the drawing parameter of the PC 200 based on the writing track 802. In an implementation, the tablet computer 100 receives a projection image, and obtains a newly added writing track based on a changed image or an image of a changed rectangular region in a current frame of projection image compared with a previous frame of projection image. The drawing parameter of the PC 200 is obtained based on the newly added writing track.

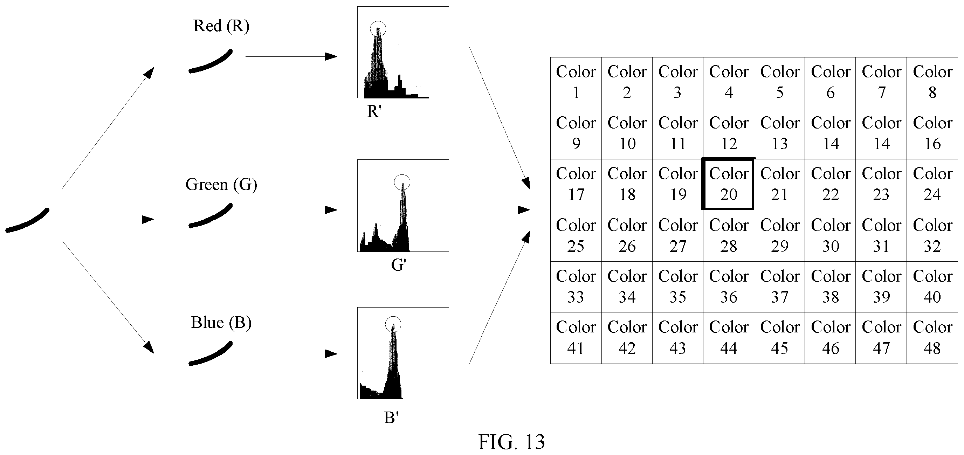

In an example, the tablet computer 100 obtains a line color based on the newly added writing track. As shown in FIG. 13, separation of three channels R (red), G (green), and B (blue) is performed on a writing track image, and statistics on extremums (R', G', B') other than 0 are collected separately in grayscale histograms of the three channels R, G, and B. A color corresponding to (R', G', B') is the line color.

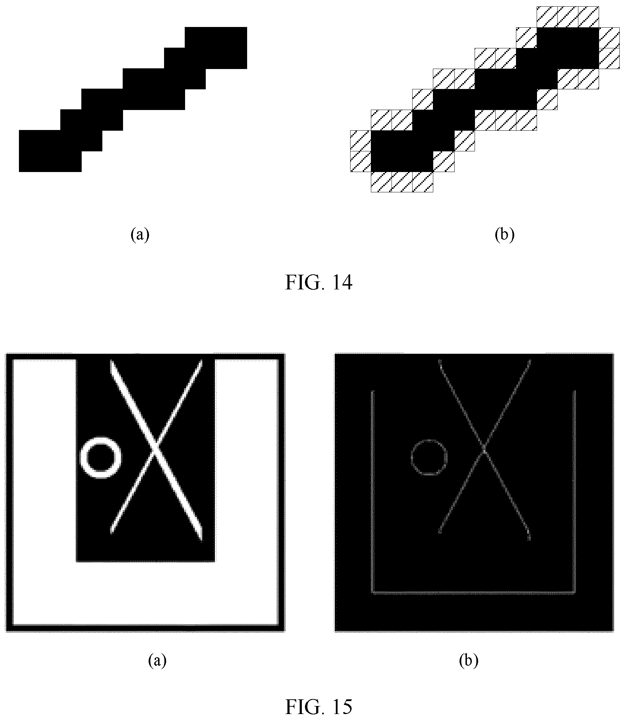

In an example, the tablet computer 100 performs binarization processing on the newly added writing track, performs a closing operation on a writing track image obtained after the binarization processing, removes an internal hole and an irregular handwriting edge in the image, and obtains a quantity of pixels $A_1$ in a connected region. For example, an original image obtained after the binarization processing is performed on the newly added writing track and the closing operation is performed is shown in (a) in FIG. 14. Then a dilation operation is performed on the original image to obtain a dilation image, and a quantity of pixels $A_2$ in the dilation image is counted. For example, a dilation operation is performed on the original image shown in (a) in FIG. 14 by using a $3 \times 3$ cross-shaped structure element, to obtain a dilation image shown in (b) in FIG. 14, and a quantity of pixels $A_2$ in the dilation image is counted. A line width W is obtained according to Formula ①:

$$\frac{A_1}{W} = \frac{A_2 - A_1}{2} - W \qquad\qquad ①$$

In an example, a thinning algorithm for a binary image (which is also referred to as an image skeleton extraction algorithm) is used to reduce a connected region of the newly added writing track to a width of one pixel. For example, an original image (the connected region of the newly added writing track) is shown in (a) in FIG. 15, and an image obtained after the original image is thinned by using the thinning algorithm for the binary image is shown in (b) in FIG. 15. An area of the connected region of the newly added writing track divided by an area of a connected region of the thinned image is the line width.

A difference between different brush types (for example, pen, pencil, marker, watercolor pen, or oil paintbrush) is mainly reflected in a texture of a main body of a writing track. In an example, a local binary pattern (LBP) feature of the newly added writing track is extracted, and an LBP histogram feature is collected as a texture feature of the writing track. Texture features of the writing track are classified by using a feature vector-based classification algorithm (for example, histogram intersection kernel, or a combination of a dimensionality reduction method of principal component analysis (principal component analysis, PCA) and a machine learning manner of support vector machine (support vector machine, SVM)), to obtain a brush type.

Certainly, in some other embodiments, another method in a conventional technology may be used to obtain, based on a writing track, drawing parameters such as a line color and a line width. This is not limited in embodiments of this application.

For example, there is a third latency when the tablet computer 100 obtains the drawing parameter of the PC 200 based on the writing track 802, and the tablet computer 100 obtains the drawing parameter of the PC 200 at a moment Tb' (Tb' = Tb + Third latency). The tablet computer 100 obtains the drawing parameter of the PC 200, and starts to perform local drawing based on an input of the stylus and the drawing parameter of the PC 200.

For example, as shown in FIG. 12, between the moment Ta and the moment Tb', the user continues to use the stylus 300 to draw a line on the tablet computer 100, and the stylus 300 moves from the point b to a point c. The tablet computer 100 sends, to the PC 200, information about an input obtained when the stylus 300 moves from the point b to the point c. The tablet computer 100 further performs local drawing based on the drawing parameter of the PC 200 and the information about the input obtained when the stylus 300 moves from the point b to the point c. At a moment Tc, the tablet computer 100 updates the projection interface. A local layer of an updated projection interface 804 includes a writing track 805, and the writing track 805 includes a writing track that is locally drawn by the tablet computer 100 based on the information about the input obtained when the stylus 300 moves from the point b to the point c. The PC 200 receives the information about the input obtained when the stylus 300 moves from the point b to the point c, and generates, based on the information about the input, a second projection image including a writing track 806. The PC 200 sends the second projection image including the writing track 806 to the tablet computer 100. The tablet computer 100 obtains the second projection image including the writing track 806, updates the projection interface at a moment Td, and displays, at a projection layer, the second projection image including the writing track 806.

It may be understood that a local layer of an updated projection interface 807 includes the writing track 805, the projection layer includes the writing track 806, and the local layer is superimposed on the projection layer. Both the writing track 805 and the writing track 806 are drawn based on the input obtained when the stylus 300 moves from the point b to the point c, and the writing track 805 and the writing track 806 have a same line track. In addition, the drawing parameter of the PC 200 is used by the tablet computer 100 to draw the writing track 805 and is used by the PC 200 to draw the writing track 806. The writing track 805 and the writing track 806 have a same line color, line width, line texture, and the like. The writing track 805 is completely the same as the writing track 806.

Because a latency in local drawing performed by the tablet computer 100 is less than a latency in obtaining the projection image from the PC 200, the moment Tc is earlier than the moment Td. In other words, the writing track locally drawn by the tablet computer 100 is displayed on a screen of the tablet computer 100 earlier than the writing track drawn by the PC 200. At the moment Td, the tablet computer 100 obtains, from the PC 200, the second projection image including the writing track 806, and displays the second projection image at the projection layer. The writing track 806 has the same line track as the writing track 805, and covers the writing track 805. From the moment Td, display of the writing track 805 may stop. In some examples, after the writing track 805 locally drawn by the tablet computer 100 is displayed for a period of time, display of the writing track 805 stops at a moment Te. For example, the moment Te is equal to the moment Td, or the moment Te is later than the moment Td.

It may be understood that, in an example, between the moment Tb' and the moment Td, the user continues to use the stylus 300 to draw a line on the tablet computer 100, and the stylus 300 moves from the point c to a point d. The tablet computer 100 performs local drawing based on information about an input obtained when the stylus moves from the point c to the point d, and displays a locally generated writing track (not shown in FIG. 12).

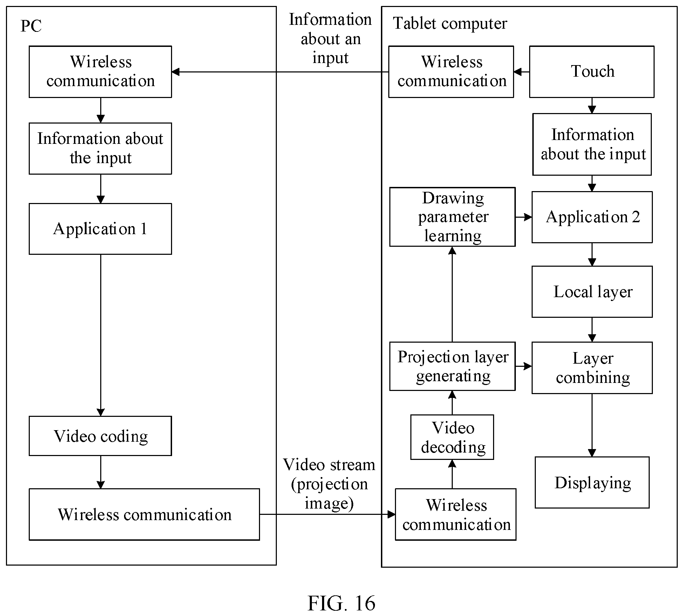

FIG. 16 shows an implementation of a method for displaying content according to an embodiment of this application. As shown in FIG. 16, an application 1 is run on a PC. For example, the application 1 is a drawing application. A tablet computer is set as an input device of the PC. The PC projects an interface of the application 1 onto the tablet computer for display. A user may use a stylus to draw a line on the tablet computer, to perform input on the PC by hand. For example, the user uses the stylus to draw a line on a screen (a projection interface) of the tablet computer, to input drawing handwriting to a display interface of the drawing application.

For example, as shown in FIG. 12, a tablet computer 100 receives an input obtained when a stylus 300 moves from a point a to a point b in an interface 801. In an implementation, a touch module of the tablet computer receives an input of the stylus, and obtains corresponding information about the input based on the input of the stylus. The information about the input includes input coordinates, and may further include any one or any combination of the following: a sense of pressure, an inclination angle, and the like. For example, an input of the stylus at one point (for example, one pixel) on the screen of the tablet computer is used as one input. The touch module of the tablet computer sends information about the input to the PC through wireless communication (for example, Bluetooth). The application 1 that is run on the PC receives the information about the input of the stylus, and draws a writing track 1 based on the information about the input of the stylus and a drawing parameter of the PC. The drawing parameter includes any one or any combination of the following: a brush type (for example, pen, pencil, marker, watercolor pen, or oil paintbrush), a line color (for example, black, red, green, blue, or purple), a line width, and a line texture (for example, no texture, water ripple, marbling, wood texture, or gravel texture). For example, as shown in FIG. 12, an application 1 that is run on a PC 200 generates a writing track 802. The application 1 further performs rendering and synthesis based on a current display interface and the writing track 1, and generates a projection image including the writing track 1. In an implementation, after combining application layers, a desktop window manager of the PC invokes a Windows screenshot API to capture a desktop image. The desktop image (which includes a display interface of the application 1) is used as a projection image for performing video coding, to generate a video stream. The video stream is sent to the tablet computer through wireless communication (for example, Wi-Fi). The tablet computer receives the video stream, performs video decoding to obtain the projection image, and generates a projection layer based on the projection image.

The tablet computer obtains, based on the projection image, the writing track 1 drawn by the PC, and performs drawing parameter learning based on the writing track 1 to obtain a drawing parameter of the PC. In an implementation, the tablet computer receives a projection image, and obtains a newly added writing track based on a changed image in a current frame of projection image compared with a previous frame of projection image. The drawing parameter of the PC is obtained based on the newly added writing track. In an example, the tablet computer averages values of drawing parameters obtained based on the current frame of projection image a plurality of times, to improve accuracy of an obtained drawing parameter of the PC.

The tablet computer further performs local drawing based on the input of the stylus. For example, an application 2 on the tablet computer draws a writing track 2 based on the drawing parameter of the PC and the information about the input of the stylus. For example, as shown in FIG. 12, the tablet computer 100 obtains a drawing parameter of the PC 200 based on the writing track 802, performs local drawing based on the drawing parameter of the PC 200 and information about an input obtained when the stylus 300 moves from the point b to a point c, and generates a writing track 805.

The tablet computer generates a local layer based on the writing track 2, and combines the projection layer and the local layer. The local layer is superimposed on the projection layer for display, that is, an updated projection interface is displayed. For example, as shown in FIG. 12, the tablet computer 100 displays an updated projection interface 804. A projection layer of the updated projection interface 804 includes the writing track 802, and a local layer includes the writing track 805. A same drawing parameter is used by the tablet computer to draw the writing track 805 and by the PC to draw the writing track 802. The writing track 805 is consistent with the writing track 802 in line color, line width, line texture, and the like.

According to the method for displaying content provided in this embodiment of this application, the tablet computer performs local drawing based on the drawing parameter of the PC, so that the locally drawn writing track is consistent with the writing track obtained from the PC in line color, line width, line texture, and the like, thereby ensuring consistency of user experience.

It may be understood that, in a process in which the user performs input by using the stylus, that is, in a process in which the stylus continuously reports points, the drawing parameter does not change. If the user changes a drawing parameter, for example, a brush type, a line color, a line width, or a line texture, a time interval between the stylus reporting points before and after the drawing parameter changes is far longer than a time interval between two strokes in an input process. In an implementation, if the tablet computer determines that a time interval between receiving an input of the stylus this time and receiving an input of the stylus last time is greater than a preset time threshold, after obtaining a projection image, the tablet computer performs drawing parameter learning. If the tablet computer determines that the time interval between receiving the input of the stylus this time and receiving the input of the stylus last time is less than or equal to the preset time threshold, after obtaining the projection image, the tablet computer does not perform drawing parameter learning. In this way, when the user starts to perform input by using the stylus, the tablet computer obtains the drawing parameter of the PC based on the projection image. In a process in which the user performs input by using the stylus, drawing parameter learning is not started, to reduce computing power and power consumption of the tablet computer.

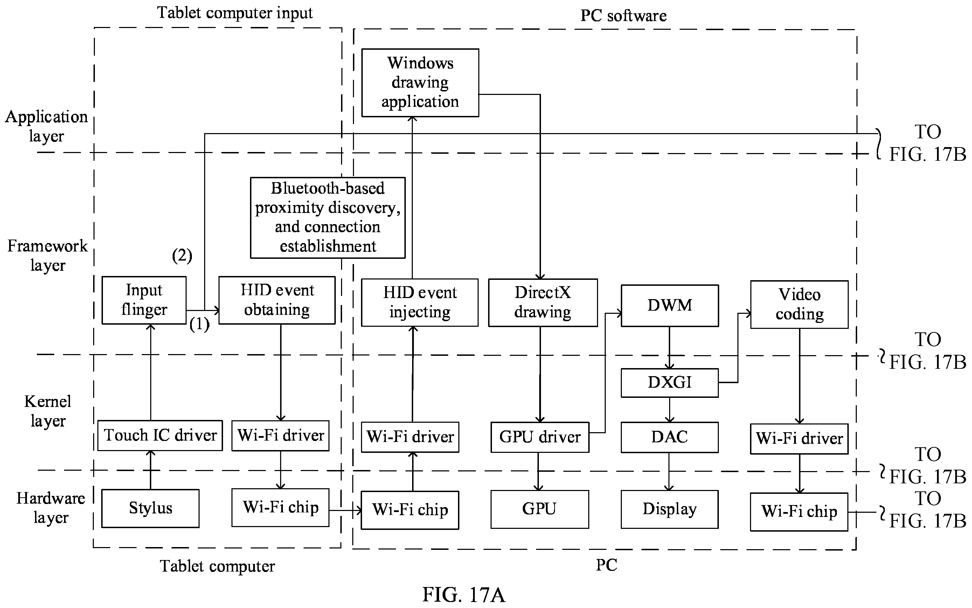

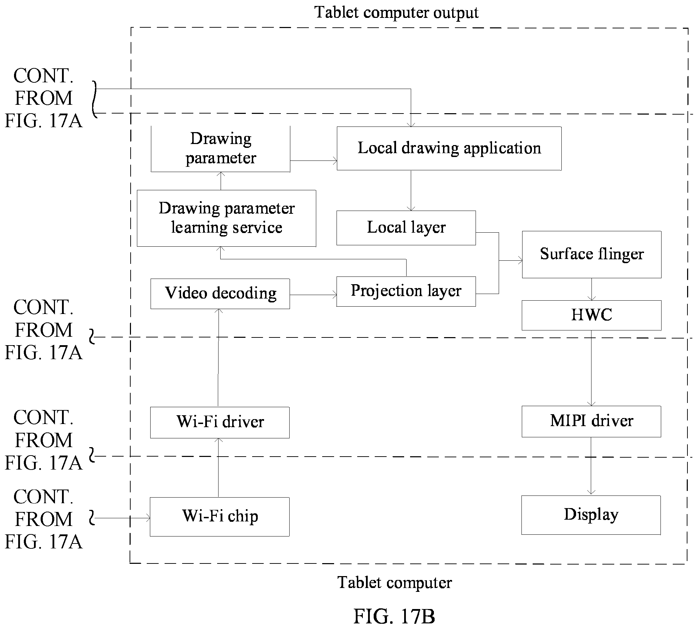

FIG. 17A and FIG. 17B show a specific implementation of a method for displaying content according to an embodiment of this application. As shown in FIG. 17A and FIG. 17B, a tablet computer establishes a Wi-Fi point-to-point connection to a PC through Bluetooth-based proximity discovery, and starts a projection service at a framework (framework) layer. At an input end of the tablet computer, the tablet computer receives an input of a stylus through Bluetooth, and a touch integrated circuit (integrated circuit, IC) driver reports, to an input flinger (input flinger) module of Android®, information (for example, input coordinates, a sense of pressure, and an inclination angle) about the input of the stylus. There are two transmission paths for the information about the input of the stylus.

As shown in Figure 17, in path (1), the information about the input of the stylus is sent to the PC. The PC generates a projection layer based on the information about the input of the stylus. In path (2), the tablet computer performs local drawing based on the information about the input of the stylus, and generates a local layer.

Path (1): The tablet computer creates a virtual USB human interface device (human interface device, HID), obtains an escaped touch event based on the information about the input of the stylus, and sends, to the PC by using a TCP/IP protocol, the information about the input of the stylus. The PC creates a virtual USB HID to inject the touch event. At an application layer of the PC, a Windows drawing application responds to the touch event and invokes a GPU for drawing. A Windows desktop window manager (desk window management, DWM) component manages a tiled state and a full-screen state of an application window, and combines surfaces (Surface) of a plurality of applications into one image. A DirectX graphics infrastructure (DirectX graphics infrastructure, DXGI) sends the combined image to a PC display for display, and invokes a screenshot API to obtain a projection image and then sends the projection image to a PC encoder for encoding to obtain a video stream. After being encapsulated by using a real time streaming protocol (real time streaming protocol, RTSP), the video stream is sent to the tablet computer through Wi-Fi by using the TCP/IP protocol. The tablet computer receives the video stream, performs RTSP decapsulation, and sends the video stream to a decoder of the tablet computer for decoding to obtain a projection layer (which is generated by the projection image). The projection layer is sent to a surface flinger (surface flinger) module for combining. It may be understood that, there is a first latency in a process from receiving the input of the stylus to obtaining the projection layer by the tablet computer.

Path (2): The framework layer of the tablet computer includes a drawing parameter learning service, which is used to obtain a drawing parameter of the PC based on the projection layer (a writing track in the projection image). The framework layer of the tablet computer further includes a local drawing application, which is used to perform local drawing based on the information about the input of the stylus and the drawing parameter obtained by the drawing parameter learning service, and generate a local layer. For example, a top view (PointerLocationView) above all windows is created. PointerLocationView is off by default. If the projection service at the framework layer is started, the drawing parameter obtained by the drawing parameter learning service is used for local drawing.

The surface flinger (surface flinger) module at the framework layer of the tablet computer combines the local layer and the projection layer to obtain an output buffer (buffer), and sends the output buffer to a HwComposer (HwComposer, HWC) module. The HWC module performs window (Layer) combining and displaying. In this case, a display of the tablet computer displays an image obtained by combining the local layer and the projection layer.

According to the method for displaying content provided in this embodiment of this application, a latency in generating the local layer by the tablet computer is less than a latency in obtaining the projection layer from the PC. The tablet computer performs local drawing, and superimposes the local layer on the projection layer for display, so that a distance between the stylus and a writing track can be reduced, thereby improving hand-following effect. In addition, the tablet computer performs local drawing based on the drawing parameter of the PC, so that a locally drawn writing track is consistent with a writing track obtained from the PC in line color, line width, line texture, and the like, thereby ensuring consistency of user experience.

In a scenario, a tablet computer is wirelessly connected to a PC, and the tablet computer is set as an input device of the PC. An application 1 is run on the PC, and a display interface of the application 1 is projected onto the tablet computer for display. A user drags a window of the application 1 on a screen of the tablet computer, to move the window of the application 1 on the screen of the tablet computer, and move the window of the application 1 on a screen of the PC.

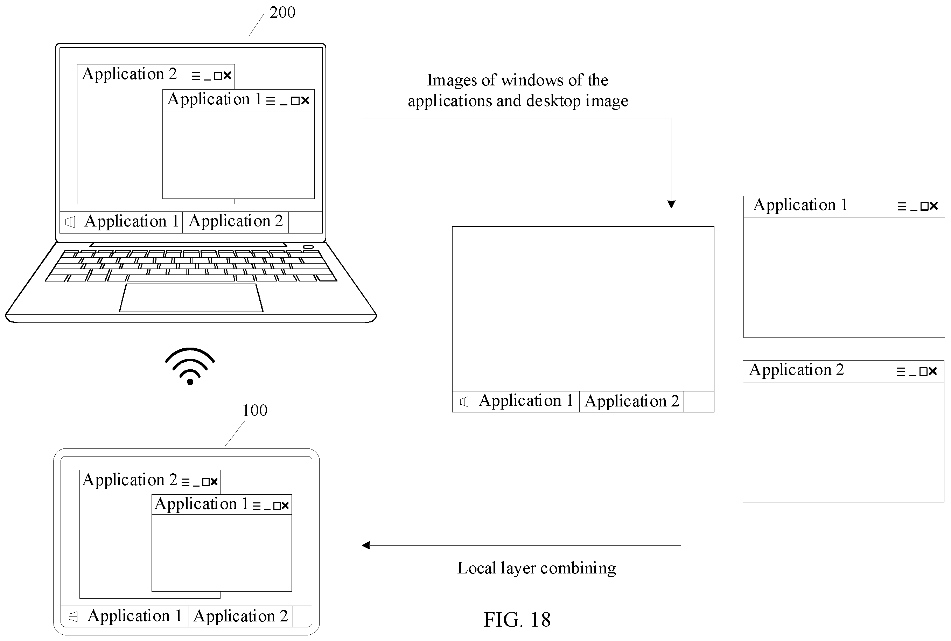

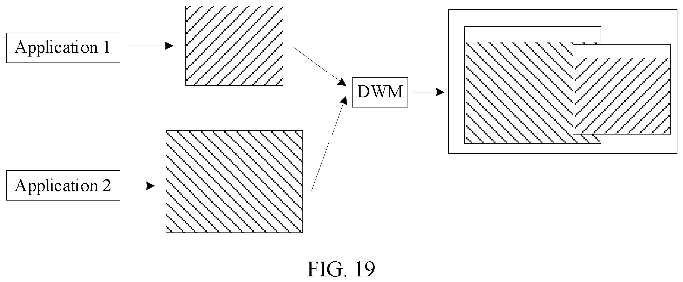

For example, as shown in FIG. 18, an application 1 and an application 2 are run on the PC, and a window of the application 1 and a window of the application 2 are displayed on a desktop of the PC. In an implementation, as shown in FIG. 19, the application 1 and the application 2 generate images of their respective windows, and send the images to a DWM of Windows. The DWM combines the images of the windows of the applications and displays a combined image on the desktop, to generate a display interface of the PC.

The PC projects the display interface onto the tablet computer for display. As shown in FIG. 18, the PC captures the images of the windows of the applications and an image of a work area on the desktop, and sends, to the tablet computer, the images of the windows of the applications and the image of the work area on the desktop. The PC further sends, to the tablet computer, position information of the windows of the applications such as a size and coordinates of the window. The tablet computer receives the images of the windows of the applications and the image of the work area on the desktop, and the position information of the windows of the applications such as the size (for example, a quantity of pixels separately occupied by a length and a width of the window) and the coordinates (for example, a pixel position of a center point of the window) of the window, generates, based on the images of the windows of the applications and the position information of the windows of the applications, images of the windows of the applications and a desktop image, performs local layer combining, displays the windows of the applications in the desktop image, and generates a display interface of the tablet computer (that is, displays a projection interface of the PC). In this case, the tablet computer displays the projection interface of the PC, and the display interface of the tablet computer is the same as the display interface of the PC. In an implementation, the tablet computer stores the images of the windows of the applications and the position information of the windows of the applications, and the desktop image.

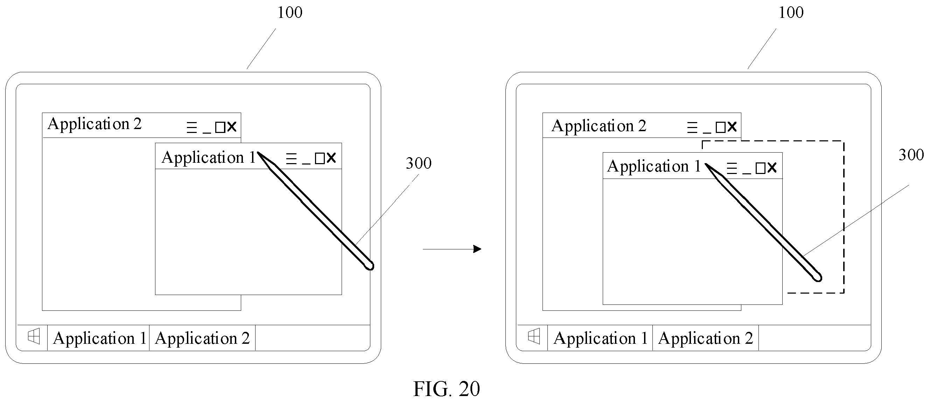

The user may perform input on the screen of the tablet computer, for example, use a stylus to draw a line within a window of an application on the screen of the tablet computer, or for example, use a stylus or a finger to tap a title bar of a window of an application on the screen of the tablet computer, and move the stylus, to drag the window of the application (that is, perform a window dragging operation on the window of the application). For example, as shown in FIG. 20, the user uses a stylus 300 to tap a title bar of a window of an application 1 on a screen of a tablet computer 100, and moves the stylus to move the window of the application 1, so as to drag the window of the application 1.

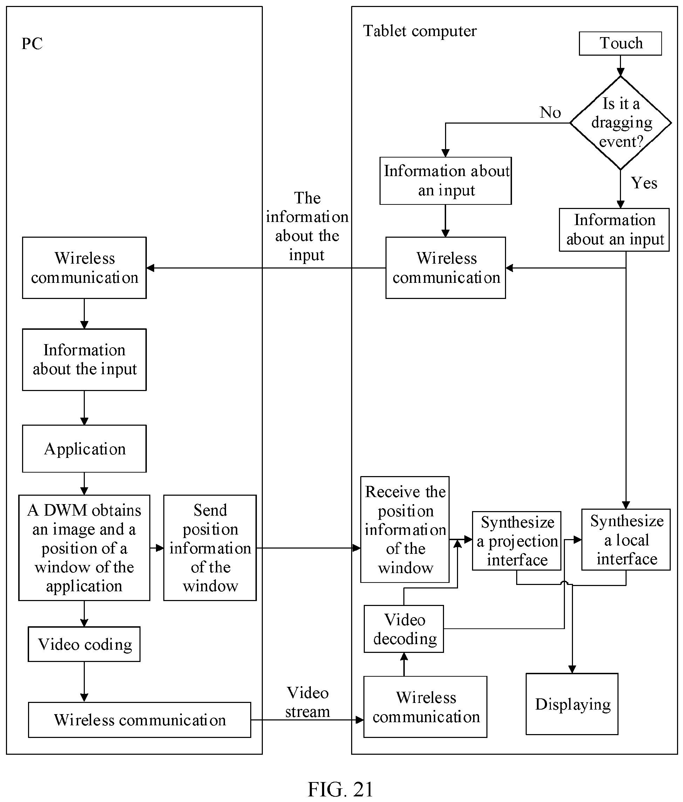

In an implementation, as shown in FIG. 21, the tablet computer receives an input of the stylus, and generates a corresponding event based on the input of the stylus. For example, if it is determined that a tapping position of the stylus is within the title bar of the window of the application and a position of the stylus changes (that is, a window dragging operation performed by the user on the window of the application 1 is received), a dragging event is generated.

If it is determined that the event is not a dragging event, the tablet computer transmits information about the input of the stylus to the PC through wireless communication (for example, Bluetooth). The PC performs a corresponding operation based on the information about the input, for example, draws a writing track based on the information about the input and a drawing parameter. Applications on the PC each generate images of their respective windows, and send the images to a DWM of Windows. The DWM combines the images of the windows of the applications and displays a combined image on a desktop image based on position information (which includes a size, coordinates, and the like of the window of the application) of the windows of the applications, and generates and displays a display interface image of the PC. For example, the display interface image includes a plurality of layers, a bottom layer includes the desktop image, and each layer above the bottom layer includes the image of the window of one application. The PC performs video coding on each layer to generate a video stream corresponding to each layer. The PC sends the video stream corresponding to each layer to the tablet computer through wireless communication (for example, Wi-Fi). The tablet computer receives the video stream corresponding to each layer, performs video decoding, and obtains an image of each layer (that is, the image of the window of the application). The PC further sends the position information of the windows of the applications to the tablet computer. In an implementation, the tablet computer stores the images of the windows of the applications and the position information of the windows of the applications, and the desktop image. The tablet computer combines the images of the windows of one or more applications and displays a combined image on the desktop image based on the position information of the windows of the applications, to synthesize a projection interface. A display of the tablet computer displays the projection interface. In this case, the tablet computer and the PC display a same interface.

If it is determined that the event is a dragging event, the tablet computer transmits information about the input of the stylus (the window dragging operation performed on the window of the application 1) and the dragging event to the PC through wireless communication (for example, Bluetooth). An application corresponding to the dragging event on the PC re-draws an image of the window of the application 1, and obtains, based on information (for example, current input coordinates) about the window dragging operation, current position information of the window of the application 1. Applications on the PC each send images of their respective windows and position information of the windows to a DWM of Windows. The DWM combines the images of the windows of the applications and displays a combined image on a desktop image based on the position information (which includes a size, coordinates, and the like of the window of the application) of the windows of the applications, and generates and displays a display interface image of the PC. The PC separately performs video coding on the images of the windows of the applications and the desktop image to generate a video stream, and sends the video stream to the tablet computer through wireless communication (for example, Wi-Fi) (for example, the PC sends a projection interface update request to the tablet computer, where the projection interface update request includes the images of the windows of the applications and the desktop image). The tablet computer receives the video stream, performs video decoding, and obtains the images of the windows of the applications and the desktop image. The PC further sends the position information of the windows of the applications to the tablet computer. In an implementation, the tablet computer stores the images of the windows of the applications and the position information of the windows of the applications, and the desktop image. The tablet computer determines the application (the application 1) corresponding to the dragging event based on the information (for example, input coordinates in a previous frame and current input coordinates) about the input of the stylus (the window dragging operation performed on the window of the application 1) and the stored position information of the applications; and further re-draws an image of the window of the application 1 based on the information (for example, the current input coordinates) about the input of the stylus (the window dragging operation performed on the window of the application 1) and the stored image of the window of the application 1. The tablet computer obtains a display position of the image of the window of the application 1 in the desktop image based on the current input coordinates of the stylus, and combines the images of the windows of the applications and displays a combined image on the desktop image based on the images of the windows of the applications and the position information of the windows, to synthesize a local interface. The display of the tablet computer displays the synthesized local interface. It may be understood that, in response to the window dragging operation performed by the user on the window of the application 1, a position of the window of the application 1 on the tablet computer changes along with a dragging track generated by the window dragging operation.

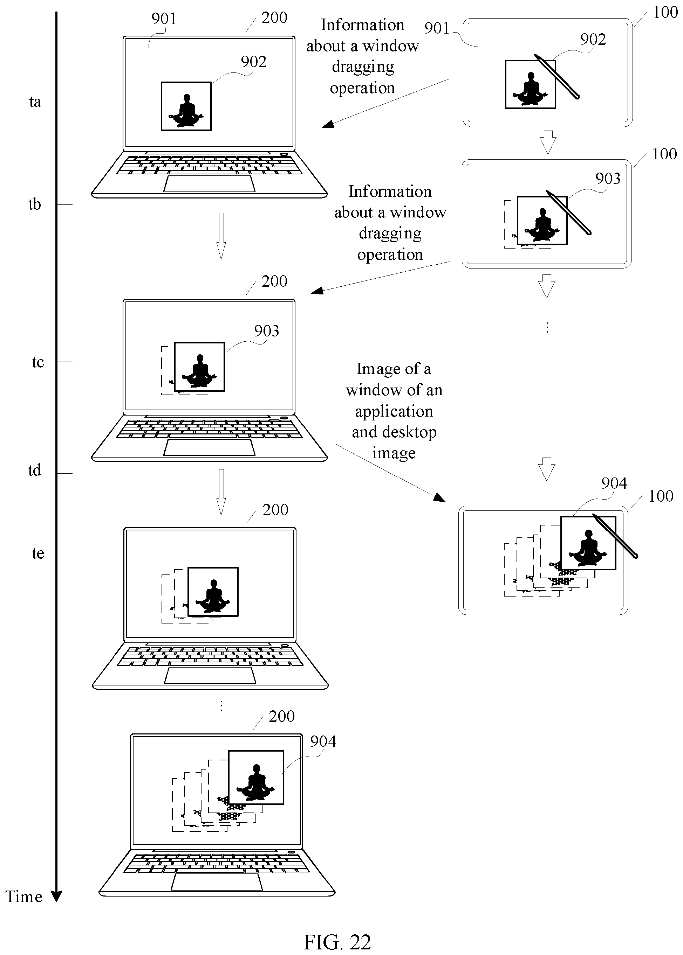

For example, as shown in FIG. 22, a tablet computer displays a projection interface of a PC, an application 1 is run on the PC, a projection interface 901 includes a window 902 of the application 1, and the window 902 is at a position 1 in the projection interface. The tablet computer receives a window dragging operation performed by a user on a window of the application 1. The tablet computer obtains a position 2 of the window dragging operation at a moment ta, draws an image of a window 903 based on a stored image of the window 902, and displays the window 903 of the application 1 at the position 2 in a desktop image at a moment tb.

The tablet computer further sends, to the PC, information about the window dragging operation performed by the user on the window of the application 1 at the moment ta. The PC obtains the position 2 of the window dragging operation at the moment ta, draws an image of the window 903 based on a stored image of the window 902, and displays the window 903 of the application 1 at the position 2 in a desktop image at a moment tc. The PC sends, to the tablet computer, the image of the window 903 of the application 1, information about the position 2, and the desktop image. The tablet computer receives and stores the image of the window 903 of the application 1, the information about the position 2, and the desktop image at a moment td.

The tablet computer obtains a position 3 of the window dragging operation at the moment td, draws an image of a window 904 based on the stored image of the window 903, and displays the window 904 of the application 1 at the position 3 in the desktop image at a moment te.

According to the method for displaying a window of an application provided in this embodiment of this application, after receiving a window dragging operation performed by the user on the application, the tablet computer locally draws an image of a window based on information about the window dragging operation and a stored image of a window of the application. A latency in locally drawing an image of a window by the tablet computer is relatively small, so that a latency in displaying content (a window of the application) in the tablet computer can be reduced, thereby improving hand-following effect of the stylus.

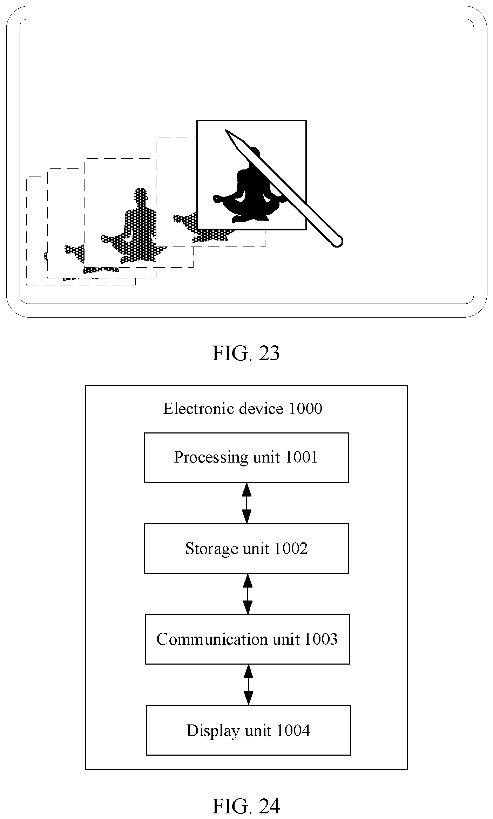

In an implementation, the tablet computer performs local drawing once when receiving an input on each frame of display interface. For example, as shown in FIG. 23, the user drags a window of an application on the tablet computer by using the stylus. The tablet computer performs local drawing once when receiving an input of the stylus on each frame of display interface. The window of the application moves with movement of the stylus, and a moving position of the window of the application is on a dragging track generated by a window dragging operation. In another implementation, the tablet computer performs local drawing once after receiving a plurality of inputs. In another implementation, the tablet computer performs local drawing when detecting that the window dragging operation ends, that is, when the stylus or a finger leaves a screen.

It may be understood that, to implement the foregoing functions, the electronic device includes corresponding hardware structures and/or software modules for performing the functions. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

In an example, FIG. 24 is a schematic diagram of a possible structure of the electronic device in the foregoing embodiments. The electronic device 1000 includes a processing unit 1001, a storage unit 1002, a communication unit 1003, and a display unit 1004.

The processing unit 1001 is configured to control and manage an action of the electronic device 1000, for example, may be configured to draw a writing track based on information about an input, and/or perform another processing step in embodiments of this application.

The storage unit 1002 is configured to store program code and data of the electronic device 1000, for example, may be configured to store a drawing parameter, position information of a window of an application, and the like obtained from a processing device.

The communication unit 1003 is configured to support the electronic device 1000 to communicate with another electronic device, for example, may be configured to send information about an input to the processing device, receive a projection image from the processing device, and/or receive a drawing parameter, position information of a window of an application, and the like from the processing device.

The display unit 1004 is configured to display an interface of the electronic device 1000.

Certainly, units or modules in the electronic device 1000 include but are not limited to the processing unit 1001, the storage unit 1002, the communication unit 1003, and the display unit 1004. For example, the electronic device 1000 may further include a power supply unit. The power supply unit is configured to supply power to the electronic device 1000.

The processing unit 1001 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The storage unit 1002 may be a memory. The communication unit 1003 may be a transceiver, a transceiver circuit, or the like. The display unit 1004 may be a display.

For example, the processing unit 1001 is a processor (the processor 110 shown in FIG. 5), the storage unit 1002 may be a memory (the internal memory 121 shown in FIG. 5), the communication unit 1003 may be referred to as a communication interface, and includes a wireless communication module (the wireless communication module 160 shown in FIG. 5), and the display unit 1004 is a display (the display 150 shown in FIG. 5, where the display 150 may be a touchscreen, and a display panel and a touch panel may be integrated into the touchscreen). The electronic device 1000 provided in this embodiment of this application may be the electronic device 100 shown in FIG. 5. The processor, the memory, the communication interface, the touchscreen, and the like may be connected together, for example, connected through a bus.

An embodiment of this application further provides a computer-readable storage medium. The computer-readable storage medium stores computer program code. When a processor executes the computer program code, an electronic device performs the method in the foregoing embodiments.

An embodiment of this application further provides a computer program product. When the computer program product is run on a computer, the computer is enabled to perform the method in the foregoing embodiments.

The electronic device 1000, the computer-readable storage medium, or the computer program product provided in embodiments of this application is configured to perform the corresponding method provided above. Therefore, for beneficial effects that can be achieved by the electronic device 1000, the computer-readable storage medium, or the computer program product, refer to the beneficial effects in the corresponding method provided above. Details are not described herein again.

# EP 4 354 267 B1

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation according to a requirement. In other words, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and there may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

In addition, the functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or a part contributing to a conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for displaying content, comprising:

   displaying, by a first electronic device, a projection interface of a first application, and receiving a first input of a stylus, wherein the first application is run on a second electronic device;
   sending, by the first electronic device, information about the first input to the second electronic device;
   receiving, by the first electronic device, a projection image from the second electronic device, and updating the projection interface based on the projection image, wherein the projection image comprises a first writing track drawn by the second electronic device based on the information about the first input;
   obtaining, by the first electronic device, a drawing parameter of the second electronic device based on the first writing track, wherein the drawing parameter comprises at least one of a brush type parameter, a line color parameter, a line width parameter, and a line texture parameter;
   receiving, by the first electronic device, a second input of the stylus;
   drawing, by the first electronic device, a second writing track based on the drawing parameter of the second electronic device and information about the second input; and
   displaying, by the first electronic device, the second writing track, wherein the second writing track is displayed as a continuation track of the first writing track.

2. The method according to claim 1, wherein the step of obtaining, by the first electronic device, a drawing parameter of the second electronic device based on the first writing track is performed in response to no stylus input being received within a preset time threshold before the first input is received.

3. The method according to claim 1 or 2, wherein the method further comprises:
   drawing, by the first electronic device, a third writing track based on the information about the first input and a drawing parameter preset by the first electronic device, wherein the third writing track and the first writing track have a same line track.

4. The method according to any one of claims 1 to 3, wherein the method further comprises:

sending, by the first electronic device, the information about the second input to the second electronic device; and receiving, by the first electronic device, a second image from the second electronic device, wherein the second image comprises a fourth writing track drawn based on the information about the second input, and the fourth writing track and the second writing track have a same line track.

5. The method according to claim 4, wherein the fourth writing track and the second writing track further have at least one of the following same elements: a line color, a line width, and a line texture.

6. The method according to any one of claims 1 to 5, wherein the projection image is displayed at a first layer, the second writing track is displayed at a second layer, and the second layer is superimposed on the first layer.

7. The method according to any one of claims 1 to 6, wherein after the second writing track is displayed for preset duration, display of the second writing track stops.

8. The method according to claim 4, wherein after the fourth writing track is displayed, display of the second writing track stops.

9. An electronic device, comprising:

one or more processors;
a display; and
a memory, wherein
the memory stores one or more computer programs, the one or more computer programs comprise instructions, and when the instructions are executed by the electronic device, the electronic device is enabled to perform the method according to any one of claims 1 to 8.

10. A computer-readable storage medium, wherein the computer-readable storage medium stores instructions, and when the instructions are run on an electronic device, the electronic device is enabled to perform the method according to any one of claims 1 to 8.

**Patentansprüche**

1. Verfahren zum Anzeigen von Inhalt, umfassend:

Anzeigen, durch eine erste elektronische Vorrichtung, einer Projektionsschnittstelle einer ersten Anwendung und Empfangen einer ersten Eingabe eines Stiftes, wobei die erste Anwendung auf einer zweiten elektronischen Vorrichtung ausgeführt wird;
Senden, durch die erste elektronische Vorrichtung, von Informationen über die erste Eingabe an die zweite elektronische Vorrichtung;
Empfangen, durch die erste elektronische Vorrichtung, eines Projektionsbilds von der zweiten elektronischen Vorrichtung und Aktualisieren der Projektionsschnittstelle basierend auf dem Projektionsbild, wobei das Projektionsbild eine erste Schreibspur umfasst, die durch die zweite elektronische Vorrichtung basierend auf den Informationen über die erste Eingabe gezeichnet wird;
Erhalten, durch die erste elektronische Vorrichtung, eines Zeichnungsparameters der zweiten elektronischen Vorrichtung basierend auf der ersten Schreibspur, wobei der Zeichnungsparameter mindestens einen Pinseltypparameter, einen Linienfarbparameter, einen Linienbreitenparameter und einen Linientexturparameter umfasst;
Empfangen, durch die erste elektronische Vorrichtung, einer zweiten Eingabe des Stiftes;
Zeichnen, durch die erste elektronische Vorrichtung, einer zweiten Schreibspur basierend auf den Zeichnungsparametern der zweiten elektronischen Vorrichtung und Informationen über die zweite Eingabe; und
Anzeigen, durch die erste elektronische Vorrichtung, der zweiten Schreibspur, wobei die zweite Schreibspur als Fortsetzungsschreibspur der ersten Schreibspur angezeigt wird.

2. Verfahren nach Anspruch 1, wobei der Schritt des Erhaltens, durch die erste elektronische Vorrichtung, eines Zeichnungsparameters der zweiten elektronischen Vorrichtung basierend auf der ersten Schreibspur als Reaktion darauf durchgeführt wird, dass innerhalb einer voreingestellten Zeitschwelle vor Empfang der ersten Eingabe keine Stifteingabe empfangen wird.

**3.** Verfahren nach Anspruch 1 oder 2, wobei das Verfahren ferner Folgendes umfasst:
Zeichnen, durch die erste elektronische Vorrichtung, einer dritten Schreibspur basierend auf den Informationen über die erste Eingabe und eines durch die erste elektronische Vorrichtung voreingestellten Zeichnungsparameters, wobei die dritte Schreibspur und die erste Schreibspur dieselbe Linienspur aufweisen.

**4.** Verfahren nach einem der Ansprüche 1 bis 3, wobei das Verfahren ferner Folgendes umfasst:

Senden, durch die erste elektronische Vorrichtung, der Informationen über die zweite Eingabe an die zweite elektronische Vorrichtung; und

Empfangen, durch die erste elektronische Vorrichtung, eines zweiten Bilds von der zweiten elektronischen Vorrichtung, wobei das zweite Bild eine vierte Schreibspur umfasst, die basierend auf den Informationen über die zweite Eingabe gezeichnet wird, und die vierte Schreibspur und die zweite Schreibspur dieselbe Linienspur aufweisen.

**5.** Verfahren nach Anspruch 4, wobei die vierte Schreibspur und die zweite Schreibspur ferner mindestens eines der folgenden gleichen Elemente aufweisen: eine Linienfarbe, eine Linienbreite und eine Linientextur.

**6.** Verfahren nach einem der Ansprüche 1 bis 5, wobei das Projektionsbild auf einer ersten Ebene angezeigt wird, die zweite Schreibspur auf einer zweiten Ebene angezeigt wird und die zweite Ebene auf der ersten Ebene überlagert ist.

**7.** Verfahren nach einem der Ansprüche 1 bis 6, wobei die Anzeige der zweiten Schreibspur stoppt, nachdem die zweite Schreibspur für eine voreingestellte Dauer angezeigt wurde.

**8.** Verfahren nach Anspruch 4, wobei die Anzeige der zweiten Schreibspur stoppt, nachdem die vierte Schreibspur angezeigt wurde.

**9.** Elektronische Vorrichtung, umfassend:

einen oder mehrere Prozessoren;

eine Anzeige; und

einen Speicher, wobei

der Speicher ein oder mehrere Computerprogramme speichert, das eine oder die mehreren Computerprogramme Anweisungen umfassen und, wenn die Anweisungen durch die elektronische Vorrichtung ausgeführt werden, die elektronische Vorrichtung in die Lage versetzt wird, das Verfahren nach einem der Ansprüche 1 bis 8 durchzuführen.

**10.** Computerlesbares Speichermedium, wobei das computerlesbare Speichermedium Anweisungen speichert und, wenn die Anweisungen auf einer elektronischen Vorrichtung ausgeführt werden, die elektronische Vorrichtung in die Lage versetzt wird, das Verfahren nach einem der Ansprüche 1 bis 8 durchzuführen.

**Revendications**

**1.** Procédé d'affichage de contenu, comprenant :

l'affichage, par un premier dispositif électronique, d'une interface de projection d'une première application, et la réception d'une première entrée d'un stylet, dans lequel la première application est exécutée sur un second dispositif électronique ;

l'envoi, par le premier dispositif électronique, d'informations concernant la première entrée au second dispositif électronique ;

la réception, par le premier dispositif électronique, d'une image de projection en provenance du second dispositif électronique, et la mise à jour de l'interface de projection sur la base de l'image de projection, dans lequel l'image de projection comprend une première piste d'écriture dessinée par le second dispositif électronique sur la base des informations concernant la première entrée ;

l'obtention, par le premier dispositif électronique, d'un paramètre de dessin du second dispositif électronique sur la base de la première piste d'écriture, dans lequel le paramètre de dessin comprend au moins l'un d'un paramètre de type de pinceau, d'un paramètre de couleur de ligne, d'un paramètre de largeur de ligne et d'un paramètre de texture de ligne ;

la réception, par le premier dispositif électronique, d'une seconde entrée du stylet ;

le fait de dessiner, par le premier dispositif électronique, une deuxième piste d'écriture sur la base du paramètre de dessin du second dispositif électronique et d'informations concernant la seconde entrée ; et

l'affichage, par le premier dispositif électronique, de la deuxième piste d'écriture, dans lequel la deuxième piste d'écriture est affichée comme une piste de continuation de la première piste d'écriture.

2. Procédé selon la revendication 1, dans lequel l'étape d'obtention, par le premier dispositif électronique, d'un paramètre de dessin du second dispositif électronique sur la base de la première piste d'écriture est réalisée en réponse à l'absence d'entrée de stylet reçue dans un seuil de temps prédéfini avant la réception de la première entrée.

3. Procédé selon la revendication 1 ou 2, dans lequel le procédé comprend en outre :

le fait de dessiner, par le premier dispositif électronique, une troisième piste d'écriture sur la base des informations concernant la première entrée et d'un paramètre de dessin prédéfini par le premier dispositif électronique, dans lequel la troisième piste d'écriture et la première piste d'écriture ont une même piste de ligne.

4. Procédé selon l'une quelconque des revendications 1 à 3, dans lequel le procédé comprend en outre :

l'envoi, par le premier dispositif électronique, des informations concernant la seconde entrée au second dispositif électronique ; et

la réception, par le premier dispositif électronique, d'une seconde image en provenance du second dispositif électronique, dans lequel la seconde image comprend une quatrième piste d'écriture dessinée sur la base des informations concernant la seconde entrée, et la quatrième piste d'écriture et la deuxième piste d'écriture ont une même piste de ligne.

5. Procédé selon la revendication 4, dans lequel la quatrième piste d'écriture et la deuxième piste d'écriture ont en outre au moins l'un des éléments suivants en commun : une couleur de ligne, une largeur de ligne et une texture de ligne.

6. Procédé selon l'une quelconque des revendications 1 à 5, dans lequel l'image de projection est affichée sur une première couche, la deuxième piste d'écriture est affichée sur une seconde couche et la seconde couche est superposée sur la première couche.

7. Procédé selon l'une quelconque des revendications 1 à 6, dans lequel après l'affichage de la deuxième piste d'écriture pendant une durée prédéfinie, l'affichage de la deuxième piste d'écriture s'arrête.

8. Procédé selon la revendication 4, dans lequel après l'affichage de la quatrième piste d'écriture, l'affichage de la deuxième piste d'écriture s'arrête.

9. Dispositif électronique, comprenant :

un ou plusieurs processeurs ;
un affichage ; et
une mémoire, dans lequel
la mémoire stocke un ou plusieurs programmes informatiques, les un ou plusieurs programmes informatiques comprennent des instructions, et lorsque les instructions sont exécutées par le dispositif électronique, le dispositif électronique est activé pour réaliser le procédé selon l'une quelconque des revendications 1 à 8.

10. Support de stockage lisible par ordinateur, dans lequel le support de stockage lisible par ordinateur stocke des instructions, et lorsque les instructions sont exécutées sur un dispositif électronique, le dispositif électronique est activé pour réaliser le procédé selon l'une quelconque des revendications 1 à 8.

200

Processing device

Wired or wireless
connection

⟵⟶

100

300

## FIG. 1

200

Information
about an input
of the stylus

⟵

100

300

Projection image

⟶

## FIG. 2A

200

Information about an
input of the stylus

Projection image

100

300

## FIG. 2B

Position at
which a
writing track
arrives

Position of
the stylus

FIG. 3

Position of
the stylus

Position of a window of
an application

FIG. 4

Electronic device 100

Antenna

| | | |
|---|---|---|
| Speaker [170A] | | Wireless communication module BT/WLAN/GNSS/NFC/IR/FM [160] |
| Receiver [170B] | Audio module [170] | |
| Microphone [170C] | | Processor [110] |
| Headset jack [170D] | | |

FIG. 5

FIG. 6

FIG. 7

FIG. 8A

Writing track 1

Writing track 2

FIG. 8B

Position of the stylus at a moment T1b

Position of the stylus at a moment T2

Position of a stylus at a moment T0

Position of the stylus at a moment T1a

FIG. 9

FIG. 10

FIG. 11

FIG. 12

FIG. 13

EP 4 354 267 B1

(a)　　　　　　　　　　　　　　　　　　(b)

FIG. 14

(a)　　　　　　　　　　　　　　　　　　(b)

FIG. 15

FIG. 16

FIG. 17A

CONT.
FROM
FIG. 17A

| Drawing parameter | → | Local drawing application |

Drawing parameter learning service

Local layer

Surface flinger

CONT.
FROM
FIG. 17A

Video decoding → Projection layer

HWC

CONT.
FROM
FIG. 17A

Wi-Fi driver

MIPI driver

CONT.
FROM
FIG. 17A

Wi-Fi chip

Display

Tablet computer

FIG. 17B

EP 4 354 267 B1

200

Application 2  ≡ _ □ ✕

Application 1 ≡ _ □ ✕

Application 1 | Application 2

Images of windows of the
applications and desktop image

Application 1 | Application 2

Application 1       ≡ _ □ ✕

Application 2       ≡ _ □ ✕

100

Application 2 ≡ _ □ ✕

Application 1 ≡ _ □ ✕

Application 1 | Application 2

Local layer combining

FIG. 18

EP 4 354 267 B1

FIG. 19

FIG. 20

FIG. 21

42

901    200    Information    901                100
about a window
dragging                   902
operation

902

ta

Information                903
about a window                 100
dragging
operation

200

903

tc

Image of a
window of an
application
and desktop
image

td

200                        904
100

te

904

200

904

Time

FIG. 22

FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110836427
- CN 111813302 A
- CN 107168674 A